# EUROPÄISCHE PATENTANMELDUNG

(11) **EP 1 512 465 A1**
(43) Veröffentlichungstag der Anmeldung: **09.03.2005**
(21) Anmeldenummer: 04018693.4
(22) Anmeldetag: 06.08.2004
(51) Int. Cl.: B05B 15/12

(54) **Vorrichtung zum Abtrennen von Overspray verschiedener Lacke**

(30) Priorität: 08.09.2003 DE 10341980; 08.09.2003 DE 10341977; 08.09.2003 DE 10341979
(71) Anmelder: Dürr Systems GmbH, 70435 Stuttgart (DE)
(72) Erfinder: Wieland, Dietmar, 70180 Stuttgart (DE); Rundel, Klaus, 73728 Esslingen (DE); Tobisch, Wolfgang, 70193 Stuttgart (DE); Rajtschan, Alexander, 70469 Stuttgart (DE)
(74) Vertreter: HOEGER, STELLRECHT & PARTNER Patentanwälte

(57) **Zusammenfassung**

Um eine Vorrichtung zum Abtrennen von Lack-Overspray aus einem Overspray-Partikel enthaltenden Luftstrom mittels mindestens einer Abtrennstufe zu schaffen, die eine getrennte Abscheidung verschiedener, nacheinander anfallender Overspray-Sorten ermöglicht, wird vorgeschlagen, daß mindestens eine Abtrennstufe der Vorrichtung mindestens zwei Partikelsammelbereiche aufweist, die abwechselnd in dem Strömungsweg desselben Teilbereichs des die Overspray-Partikel enthaltenden Luftstroms angeordnet werden können.

## Beschreibung

Die vorliegende Erfindung betrifft eine Vorrichtung zum Abtrennen von Lack-Overspray aus einem Overspray-Partikel enthaltenden Luftstrom mittels mindestens einer Abtrennstufe.

Solche Vorrichtungen werden in Anlagen zum Lackieren von Werkstücken, insbesondere zum Spritzlackieren von Fahrzeugkarosserien, eingesetzt, in denen ein Luftstrom durch einen Lackierbereich der Anlage erzeugt wird, welcher überschüssigen Lack aus dem Lackierbereich abführt.

Es ist bekannt, den mitgeführten Lack-Overspray beispielsweise mittels Auswaschung, mittels Beutelfiltern oder Taschenfiltern oder (im Falle von Pulverlacken) Sinterlamellenfiltern aus dem Luftstrom abzuscheiden.

Die bekannten Vorrichtungen zum Abtrennen des Lack-Oversprays haben jedoch den Nachteil, daß Lack-Overspray aus in dem Lackierbereich nacheinander verarbeiteten Lacksorten gemeinsam abgeschieden wird, so daß der aus dem Luftstrom abgetrennte Lack-Overspray nur schwer oder gar nicht einer Wiederverwertung zuführbar ist.

Der vorliegenden Erfindung liegt die Aufgabe zugrunde, eine Vorrichtung der eingangs genannten Art zu schaffen, welche es ermöglicht, nacheinander Overspray-Partikel unterschiedlicher Overspray-Sorten, insbesondere unterschiedlicher Farben, sortenrein abscheiden und erfassen zu können.

Diese Aufgabe wird bei einer Vorrichtung mit den Merkmalen des Oberbegriffs von Anspruch 1 erfindungsgemäß dadurch gelöst, daß mindestens eine Abtrennstufe der Vorrichtung mindestens zwei Partikelsammelbereiche aufweist, die abwechselnd in dem Strömungsweg desselben Teilbereichs des die Overspray-Partikel enthaltenden Luftstroms angeordnet werden können.

Durch die erfindungsgemäße Lösung ist es möglich, daß Overspray-Partikel einer ersten Sorte, insbesondere einer ersten Farbe, aus dem betreffenden Teilbereich des Luftstroms in einer ersten Sammelphase an einem ersten Partikelsammelbereich und Overspray-Partikel einer zweiten Sorte, insbesondere einer zweiten Farbe, in einer späteren zweiten Sammelphase an einem zweiten Partikelsammelbereich abgeschieden werden.

Die auf diese Weise sortenrein getrennt voneinander abgeschiedenen Overspray-Sorten können anschließend getrennt voneinander in jeweils zugeordnete Overspray-Sammelbehälter überführt und aus diesen Sammelbehältern sortenrein für eine Wiederverwertung entnommen werden.

Die Anzahl der verschiedenen Partikelsammelbereiche, die abwechselnd in den Luftstrom eingebracht werden können, kann natürlich auch größer sein als zwei und entspricht vorzugsweise der Anzahl der unterschiedlichen Sorten von Lack, welche nacheinander in dem Lackierbereich verarbeitet werden.

Die verschiedenen Partikelsammelbereiche zum sortenreinen Abscheiden unterschiedlicher Overspray-Sorten können grundsätzlich an räumlich voneinander getrennten Bereichen desselben Abtrennelements angeordnet sein.

Vorzugsweise ist aber vorgesehen, daß die mindestens zwei Partikelsammelbereiche, die abwechselnd in den Strömungsweg desselben Teilbereichs des die Overspray-Partikel enthaltenden Luftstroms eingebracht werden können, an mindestens zwei verschiedenen Abtrennelementen angeordnet sind.

Vorzugsweise ist vorgesehen, daß die Partikelsammelbereiche der mindestens zwei Abtrennelemente unabhängig voneinander in den Luftstrom hinein und/oder aus dem Luftstrom heraus bewegbar sind.

Zu der Art der Abtrennelemente, an denen die Partikelsammelbereiche angeordnet sind, wurden bislang noch keine näheren Angaben gemacht.

Bei einer bevorzugten Ausgestaltung der erfindungsgemäßen Vorrichtung ist vorgesehen, daß mindestens einer der Partikelsammelbereiche an einem Sieb angeordnet ist, das Durchtrittsöffnungen für den Luftstrom und eine elektrisch leitfähige Oberfläche aufweist.

Ein solches Sieb bietet eine einfache und effiziente Möglichkeit zum Abtrennen des Lack-Oversprays aus dem die Overspray-Partikel enthaltenden Luftstrom.

Aufgrund der elektrischen Leitfähigkeit zumindest eines Teils der Oberfläche des Siebes ergibt sich eine elektrostatische Wechselwirkung zwischen dem Sieb einerseits und den in dem Luftstrom enthaltenen Overspray-Partikeln andererseits, welche bei der Zerstäubung in einer Spritzlackiervorrichtung elektrisch aufgeladen werden und üblicherweise eine negative Polarität aufweisen. Aufgrund des elektrischen Influenzeffektes bilden sich an der elektrisch leitfähigen Oberfläche des Siebes Spiegelladungen mit einer der Polarität der Overspray-Partikel entgegengesetzten Polarität, so daß diese Spiegelladungen die elektrisch geladenen Overspray-Partikel anziehen und die Overspray-Partikel zu den zwischen den Durchtrittsöffnungen für den Luftstrom liegenden Bereichen des Siebes hin abgelenkt werden. Nach dem Auftreffen auf dem Sieb und der Entladung der Overspray-Partikel bleiben dieselben aufgrund von Adhäsionskräften auf dem Sieb haften.

Aufgrund dieser elektrostatischen Wechselwirkung des Siebs mit den Overspray-Partikeln geht die Abtrennwirkung des Siebes für Overspray-Partikel weit über die normale mechanische Abtrennwirkung eines Siebes hinaus.

Durch die in dem Sieb vorhandenen Durchtrittsöffnungen für den Luftstrom wird erreicht, daß über das Sieb hinweg nur ein geringer Druckverlust auftritt, so daß eine vergleichsweise geringe Energie dazu ausreicht, den Luftstrom die das Sieb enthaltende Abtrennstufe passieren zu lassen.

Die elektrostatische Wechselwirkung zwischen dem Sieb und dem Lack-Overspray ist besonders groß, wenn das Sieb im wesentlichen aus einem elektrisch leitfähigen Material besteht.

Grundsätzlich ist aber auch denkbar, daß das Sieb eine Grundstruktur aus einem elektrisch nicht leitfähigen Material umfaßt, welche mit einem elektrisch leitfähigen Material beschichtet ist.

Insbesondere kann vorgesehen sein, daß das Sieb eine metallische Oberfläche aufweist.

Besonders günstig ist es, wenn das Sieb im wesentlichen aus einem metallischen Material besteht.

Um ein möglichst korrosionsbeständiges und dabei gut elektrisch leitfähiges Sieb zu erhalten, ist es günstig, wenn das Sieb ein Edelstahl-Material umfaßt, vorzugsweise im wesentlichen aus dem Edelstahl-Material besteht.

Um zu verhindern, daß sich das Sieb während des Abtrennvorgangs des Lack-Oversprays elektrisch gleichsinnig wie die Overspray-Partikel auflädt, ist vorteilhafterweise vorgesehen, daß die Vorrichtung eine Einrichtung zum Erden des Siebes, das heißt um das Sieb auf Massepotential zu legen, umfaßt.

Um die elektrostatische Anziehung zwischen dem Sieb und den Overspray-Partikeln weiter zu erhöhen, kann auch vorgesehen sein, daß die Vorrichtung eine Einrichtung umfaßt, mittels welcher das Sieb auf ein elektrisches Potential legbar ist, das eine der elektrischen Ladung der Overspray-Partikel entgegengesetzte Polarität aufweist.

Bei negativ geladenen Overspray-Partikeln kann also insbesondere vorgesehen sein, daß das Sieb über elektrisch leitende Kontakte auf ein positives Potential gelegt wird.

Bei einer bevorzugten Ausgestaltung der Erfindung ist vorgesehen, daß das Sieb ein Drahtgitter und/oder ein Drahtgewebe umfaßt.

Als besonders günstig hat es sich erwiesen, wenn das Drahtgitter bzw. das Drahtgewebe aus Draht mit einem Durchmesser im Bereich von ungefähr 1 µm bis ungefähr 500 µm, vorzugsweise im Bereich von ungefähr 4 µm bis ungefähr 40 µm, gebildet ist.

Um einen guten Kompromiß zwischen einem möglichst hohen Abscheidegrad und einem möglichst geringen Druckverlust zu erzielen, kann vorgesehen sein, daß das Drahtgitter bzw. das Drahtgewebe eine Maschenweite im Bereich von ungefähr 1 µm bis ungefähr 1.000 µm, vorzugsweise im Bereich von ungefähr 4 µm bis ungefähr 40 µm, aufweist.

Um den Druckverlust beim Hindurchtreten des Luftstroms durch das Sieb möglichst klein zu halten, ist vorteilhafterweise vorgesehen, daß die offene Siebfläche mindestens ungefähr 20 %, vorzugsweise mindestens ungefähr 25 %, insbesondere mindestens ungefähr 30 %, der gesamten Siebfläche beträgt.

Dabei ist unter der "offenen Siebfläche" die Summe der Fläche der Durchtrittsöffnungen des Siebes gegebenenfalls projiziert auf eine zur Strömungsrichtung des Luftstroms senkrechte Ebene, zu verstehen, während unter der "gesamten Siebfläche" die gesamte von dem Sieb überspannte Fläche, gegebenenfalls projiziert auf eine zur Strömungsrichtung des Luftstroms senkrechte Ebene, zu verstehen ist.

Um die das Sieb enthaltende Abtrennstufe möglichst raumsparend ausbilden zu können, ist vorzugsweise vorgesehen, daß das Sieb als ein Flächengebilde ausgebildet ist, also als ein Körper, der zwei im wesentlichen zueinander parallele Hauptflächen aufweist und längs dieser Hauptflächen eine Ausdehnung aufweist, welche sehr viel größer ist als die Dicke des Flächengebildes, daß heißt dessen Ausdehnung senkrecht zu den Hauptflächen.

Insbesondere hat es sich als vorteilhaft erwiesen, wenn die Dicke des Siebes kleiner ist als ungefähr das 5000fache, vorzugsweise kleiner als ungefähr das 100fache, insbesondere kleiner als ungefähr das Zehnfache, des mittleren hydraulischen Durchmessers der Durchtrittsöffnungen des Siebes.

Unter dem "hydraulischen Durchmesser" ist dabei in dieser Beschreibung und in den beigefügten Ansprüchen der Quotient aus der vierfachen Durchtrittsfläche der Durchtrittsöffnung einerseits und dem Umfang der Durchtrittsöffnung andererseits zu verstehen. Bei einer Durchtrittsöffnung mit kreisförmigen Querschnitt entspricht der hydraulische Durchmesser dem Kreisdurchmesser der Durchtrittsöffnung. Bei einer Durchtrittsöffnung mit quadratischem Querschnitt entspricht der hydraulische Durchmesser der Kantenlänge des Quadrates.

Ein guter Kompromiß zwischen niedrigem Druckverlust einerseits und hohem Abscheidegrad andererseits ergibt sich, wenn der mittlere hydraulische Durchmesser der Durchtrittsöffnungen des Siebes im Bereich von ungefähr 1 µm bis ungefähr 1.000 µm, vorzugsweise im Bereich von ungefähr 4 µm bis ungefähr 40 µm, liegt.

Um das Sieb bei Nichtgebrauch raumsparend verstauen und für die Ingebrauchnahme in einfacher Weise aus einer Ruhestellung in eine Arbeitsstellung bewegen zu können, ist es von Vorteil, wenn das Sieb flexibel ausgebildet ist.

Das Sieb kann in der Ruhestellung besonders raumsparend untergebracht werden, wenn es aufrollbar ist.

Um verschiedene Teile des Siebes oder eines anderen Abtrennelementes nacheinander zum Abscheiden des Lack-Oversprays verwenden zu können, kann vorgesehen sein, daß die Vorrichtung zum Abtrennen des Lack-Oversprays mindestens einen Partikelsammelbereich aufweist, der im wesentlichen kontinuierlich durch den Strömungsweg des die Overspray-Partikel enthaltenden Luftstroms hindurch bewegbar ist.

Alternativ oder ergänzend hierzu kann vorgesehen sein, daß die Vorrichtung mindestens einen Partikelsammelbereich aufweist, der in den Strömungsweg des die Overspray-Partikel enthaltenden Luftstroms hinein bewegbar und nach einer Sammelphase aus dem Strömungsweg des Luftstroms heraus bewegbar ist.

Um das Sieb oder ein anderes Abtrennelement, insbesondere während des Betriebs der Vorrichtung, von dem abgeschiedenen Lack-Overspray reinigen zu können, ist vorteilhafterweise vorgesehen, daß die Vorrichtung mindestens eine Abreinigungsvorrichtung zum Abreinigen von Partikeln, insbesondere von Overspray-Partikeln, von dem mindestens einen Abtrennelement umfaßt.

Eine solche Abreinigungsvorrichtung kann insbesondere eine Absaugeinrichtung zum Absaugen von Partikeln von dem Abtrennelement umfassen.

Dabei kann insbesondere vorgesehen sein, daß die Partikel quer, vorzugsweise im wesentlichen senkrecht, zur Abscheideoberfläche des Abtrennelements abgesaugt werden.

Alternativ oder ergänzend hierzu kann jedoch auch vorgesehen sein, daß die Partikel im wesentlichen parallel zur Abscheideoberfläche des Abtrennelements abgesaugt werden.

Im Falle eines aufrollbaren Siebes ist eine solche Absaugung parallel zur Sieboberfläche insbesondere auch dann möglich, wenn das Sieb in einem Ruhezustand aufgerollt ist, sofern durch Abstandshalter gewährleistet ist, daß die einander benachbarten Lagen des Siebes voneinander beabstandet sind, so daß die Partikel zwischen den einander benachbarten Lagen des Siebes abgesaugt werden können.

Ferner kann vorgesehen sein, daß die Abreinigungsvorrichtung eine Druckluftdüse zum Abblasen von Partikeln von dem Abtrennelement umfaßt.

Alternativ oder ergänzend hierzu kann auch vorgesehen sein, daß die Abreinigungsvorrichtung eine Bürste zum Abbürsten von Partikeln von dem Abtrennelement umfaßt.

Insbesondere im Fall der Abscheidung von Naßlack-Overspray kann auch vorgesehen sein, daß die Abreinigungsvorrichtung einen Abstreifer zum Abstreifen von Overspray von dem Abtrennelement umfaßt.

Die Abreinigungsvorrichtung kann als eine trockene Abreinigungsvorrichtung ausgebildet sein, das heißt als eine Abreinigungsvorrichtung, die keine Flüssigkeit zum Abreinigen des Abtrennelements verwendet.

Alternativ oder ergänzend hierzu kann aber auch eine nasse Abreinigungsvorrichtung verwendet werden, die eine Einrichtung zum Abreinigen des Abtrennelements mittels einer Flüssigkeit umfaßt.

Eine solche nasse Abreinigungsvorrichtung eignet sich insbesondere zum Abreinigen von Naßlack-Overspray von dem Abtrennelement.

Insbesondere kann vorgesehen sein, daß die Abreinigungsvorrichtung ein Reinigungsbad für das Abtrennelement umfaßt.

Sowohl bei trockener als auch bei nasser Abreinigung ist es von Vorteil, wenn ein Partikelsammelbereich des Abtrennelements durch die Abreinigungsvorrichtung hindurch bewegbar ist.

Um verschiedene Sorten von Overspray sortenrein getrennt voneinander erfassen zu können, kann vorgesehen sein, daß die Vorrichtung Sammelbehälter für mindestens zwei verschiedene Sorten von Overspray umfaßt, denen von derselben Abreinigungsvorrichtung abwechselnd Overspray-Partikel zugeführt werden.

In diesem Fall ist es von Vorteil, wenn die Abreinigungsvorrichtung eine integrierte Selbstreinigungseinrichtung, beispielsweise in Form von Druckluftdüsen, aufweist, mittels welcher die Abreinigungsvorrichtung selbst nach der Abreinigung einer bestimmten Sorte von Overspray gereinigt werden kann, bevor eine andere Sorte von Overspray mit der Abreinigungsvorrichtung abgereinigt wird, um eine Vermischung verschiedener Sorten von Overspray in den Sammelbehältern, insbesondere eine Farbverschleppung, auszuschließen.

Alternativ oder ergänzend hierzu kann vorgesehen sein, daß die Vorrichtung mindestens zwei Abreinigungsvorrichtungen für mindestens zwei verschiedene Sorten von Overspray umfaßt, so daß eine bestimmte Abreinigungsvorrichtung immer nur zum Abreinigen einer bestimmten Sorte von Overspray verwendet wird. Auf diese Weise ist eine Vermischung verschiedener Sorten von Overspray, insbesondere eine Farbverschleppung, von vornherein ausgeschlossen.

Um das Abtrennelement von einer Ruhestellung in die Arbeitsstellung im Strömungsweg des Luftstroms und wieder zurück in die Ruhestellung bewegen zu können, ist vorgesehen, daß das Abtrennelement längs einer Bewegungsrichtung beweglich ist und die Vorrichtung mindestens eine Führung zum seitlichen Führen des Siebes umfaßt.

Um zu gewährleisten, daß das Abtrennelement im wesentlichen ebene Hauptflächen aufweist und über seine gesamte Länge hinweg im wesentlichen dieselbe Breite hat, kann vorgesehen sein, daß das Abtrennelement mit einer Verstärkung versehen ist, die an der Führung geführt ist.

Bei einer besonderen Ausgestaltung der Erfindung ist vorgesehen, daß die Führung ein Magnetelement umfaßt und/oder das Abtrennelement mit einer Einfassung versehen ist, welche ein Magnetelement umfaßt, so daß das Abtrennelement durch Wechselwirkung des Magnetelements der Führung mit einem ferromagnetischen Material des Abtrennelements und/oder durch Wechselwirkung eines an dem Abtrennelement angeordneten Magnetelements mit einem ferromagnetischen Material der Führung an der Führung geführt ist.

Um das Abtrennelement von der Ruhestellung in die Arbeitsstellung und/oder zurück in die Ruhestellung bewegen zu können, kann vorgesehen sein, daß das Abtrennelement mittels eines Zugmittels, insbesondere eines Zugseils, bewegbar ist.

Insbesondere kann das Abtrennelement eine Halterung zum Verbinden des Zugmittels mit dem Abtrennelement aufweisen.

Alternativ oder ergänzend hierzu kann auch vorgesehen sein, daß das Abtrennelement mittels einer Schubkette von der Ruhestellung in die Arbeitsstellung und/oder von der Arbeitsstellung in die Ruhestellung bewegbar ist.

Bei einer besonderen Ausgestaltung der Erfindung ist vorgesehen, daß das Abtrennelement Haltelaschen zum Verbinden des Abtrennelements mit der Schubkette aufweist.

Um das Abtrennelement mechanisch zu stabilisieren und eine unerwünschte Einschnürung des Abtrennelements zu verhindern, kann vorgesehen sein, daß das Abtrennelement Sicken aufweist.

Wenn das Abtrennelement in seiner Bewegungsrichtung bewegbar ist, so ist es günstig, wenn sich die Sicken quer, vorzugsweise im wesentlichen senkrecht, zu der Bewegungsrichtung des Abtrennelements erstrecken.

Um eine möglichst vollständige Abtrennung des Lack-Oversprays aus dem die Overspray-Partikel enthaltenden Luftstrom zu erzielen, ist es von Vorteil, wenn die Vorrichtung mindestens zwei hintereinander geschaltete Abtrennstufen zum Abtrennen des Oversprays aus dem Luftstrom umfaßt.

Da sich ein als Abtrennelement verwendetes Sieb besonders gut für eine Vorabscheidung des Lack-Oversprays und für die Aufnahme großer Overspray-Mengen eignet, weil es insbesondere in einfacher Weise abreinigbar ist, ist vorzugsweise vorgesehen, daß die Abtrennstufe, welche zuerst von dem Luftstrom passiert wird, mindestens ein solches Sieb umfaßt.

Da mit einer ein solches Sieb enthaltenden Abtrennstufe ohne weiteres Abscheidegrade von 80 bis 90 Gewichtsprozent des Lack-Oversprays erzielt werden, kann in einer weiteren Abtrennstufe eine auf eine reduzierte Lack-Overspray-Menge optimierte Abscheidetechnik eingesetzt werden.

So kann beispielsweise vorgesehen sein, daß mindestens eine der Abtrennstufen einen Absorptionsfilter, insbesondere einen Beutelfilter und/oder einen Taschenfilter, umfaßt.

Durch die Overspray-Vorabscheidung an einem Sieb wird die Standzeit solcher Tiefenfilter in einer nachgeschalteten Abtrennstufe deutlich erhöht.

Besonders günstig ist es, wenn alle Abtrennstufen der Vorrichtung als trockene Abtrennstufen ausgebildet sind, das heißt als Abtrennstufen, in denen keine Flüssigkeit zum Auswaschen der Overspray-Partikel aus dem Luftstrom verwendet wird.

Da bei einer solchen Vorrichtung, die ausschließlich trockene Abtrennstufen verwendet, der zu reinigende Luftstrom nicht mit einer Flüssigkeit in Kontakt kommt, ist es auch nicht erforderlich, anschließend an den Overspray-Abtrennvorgang eine Entfeuchtung des gereinigten Luftstroms durchzuführen, und zwar auch dann nicht, wenn dieser Luftstrom ganz oder teilweise in einem Umluftbetrieb wieder dem Lackierbereich zugeführt wird.

Durch das Entfallen eines Entfeuchtungsvorgangs für die Abluft der Vorrichtung zum Abtrennen des Oversprays aus dem Luftstrom wird eine deutliche Energieeinsparung erzielt und der apparative Aufwand deutlich verringert.

Der Begriff "trockene Abtrennstufe" bezieht sich dabei in dieser Beschreibung und in den beigefügten Ansprüchen auf eine Abtrennstufe, in welcher "trockene" Abtrennelemente zum Abtrennen der Overspray-Partikel aus dem Luftstrom verwendet werden; eine solche "trockene Abtrennstufe" kann mit einer "trockenen" oder einer "nassen" Abreinigungsvorrichtung versehen sein.

Anspruch 47 ist auf eine Anlage zum Lackieren von Werkstücken, insbesondere von Fahrzeugkarosserien, gerichtet, die eine Einrichtung zur Erzeugung eines Luftstroms durch einen Lackierbereich der Anlage und eine erfindungsgemäße Vorrichtung zum Abtrennen von Lack-Overspray aus dem Luftstrom umfaßt.

Die erfindungsgemäße Vorrichtung eignet sich besonders zur Verwendung in einer Anlage, die zum Lackieren der Werkstücke mit einem Naßlack ausgebildet ist, wobei in diesem Fall die Vorrichtung zum Abtrennen des Naßlack-Oversprays aus dem Luftstrom vorzugsweise mindestens zwei Abtrennstufen umfaßt, wobei die zuerst von dem Luftstrom passierte Abtrennstufe als eine trockene Abtrennstufe mit einem Abtrennelement, insbesondere einem Sieb, und einer Abreinigungsvorrichtung zum Abreinigen von Overspray von dem Abtrennelement ausgebildet ist.

Besonders günstig ist es, wenn in diesem Fall alle Abtrennstufen der Vorrichtung zum Abtrennen des Naßlack-Oversprays aus dem Luftstrom als trockene Abtrennstufen ausgebildet sind, da in diesem Fall der Luftstrom in den Abtrennstufen nicht befeuchtet wird und somit auch eine energieintensive Entfeuchtung des Luftstroms nach dem Austreten aus der Vorrichtung entfallen kann.

Vorzugsweise umfaßt eine solche Anlage eine Umlufteinrichtung, durch welche zumindest ein Teil des durch die Vorrichtung zum Abtrennen von Naßlack-Overspray geleiteten Luftstroms zu dem Lackierbereich der Anlage zurückgeleitet wird.

Der vorliegenden Erfindung liegt die weitere Aufgabe zugrunde, ein Verfahren zum Abtrennen von Lack-Overspray aus einem Overspray-Partikel enthaltenden Luftstrom zu schaffen, das eine getrennte Abscheidung verschiedener, nacheinander anfallender Overspray-Sorten ermöglicht.

Diese Aufgabe wird erfindungsgemäß durch ein Verfahren gemäß Anspruch 51 gelöst, bei dem mindestens zwei Partikelsammelbereiche abwechselnd in dem Strömungsweg desselben Teilbereichs des Luftstroms angeordnet werden, so daß Overspray-Partikel aus dem betreffenden Teilbereich des Luftstroms in einer ersten Sammelphase an dem einen Partikelsammelbereich und in einer späteren zweiten Sammelphase an dem anderen Partikelsammelbereich abgeschieden werden.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen Längsschnitt durch eine Anlage zu Lackieren von Fahrzeugkarosserien, die eine Vorrichtung zum Abtrennen von Overspray aus einem Luftstrom mittels längs der Förderrichtung beweglicher Siebe umfaßt;
- Fig. 2: eine schematische Draufsicht auf die Siebe der Anlage aus Fig. 1 von oben ;
- Fig. 3: eine schematische ausschnittsweise Draufsicht auf ein Sieb;
- Fig. 4: einen schematischen Querschnitt durch das Sieb aus Fig. 3;
- Fig. 5: eine schematische Darstellung der Abscheidung von Overspray-Partikeln an einem Sieb;
- Fig. 6: eine schematische Darstellung von Einrichtungen zur Erdung eines Siebes;
- Fig. 7: einen schematischen Schnitt durch eine Führungseinrichtung zum seitlichen Führen eines Siebes;
- Fig. 8: eine schematische Seitenansicht eines mit Sicken versehenen Siebes;
- Fig. 9: eine schematische Draufsicht auf ein mit Sicken versehenes Sieb;
- Fig. 10: einen schematischen Querschnitt durch eine Führungseinrichtung zum seitlichen Führen eines Siebes, welche ein Magnetelement umfaßt;
- Fig. 11: einen schematischen Querschnitt durch eine Anlage zum Lackieren von Fahrzeugkarosserien, die eine Vorrichtung zum Abtrennen von Lack-Overspray aus einem Luftstrom mit quer zur Förderrichtung der Fahrzeugkarosserien bewegbaren Sieben umfaßt;
- Fig. 11A: eine schematische Draufsicht auf die Siebe der Anlage aus Fig. 11 von oben;
- Fig. 12: einen schematischen Längsschnitt durch eine Anlage zum Lackieren von Fahrzeugkarosserien mit verschiedenen Sorten von Lack, die eine Vorrichtung zum sortenreinen Abtrennen von Lack-Overspray aus einem Luftstrom mit mehreren beweglichen Sieben umfaßt;
- Fig. 13: eine schematische Draufsicht von oben auf Siebe der Anlage aus Fig. 12;
- Fig. 14: einen schematischen Querschnitt durch die Anlage aus Fig. 12;
- Fig. 15: eine schematische perspektivische Darstellung einer Vorrichtung zum Bewegen eines aufrollbaren Siebes mittels eines Zugseils;
- Fig. 16: eine schematische perspektivische Darstellung einer Vorrichtung zum Bewegen eines aufrollbaren Siebes mittels eines Zugseils, das über Umlenkrollen geführt ist;
- Fig. 17: eine schematische perspektivische Darstellung einer Vorrichtung zum Bewegen eines aufrollbaren Siebes mittels einer Schubkette;
- Fig. 18: eine schematische Darstellung eines um eine Antriebstrommel und eine Umlenktrommel umlaufenden Siebes;
- Fig. 19: eine schematische Draufsicht auf einen seitlichen Rand eines Siebes mit Haltelaschen für die Verbindung des Siebes mit einer Schubkette;
- Fig. 20: einen schematischen Schnitt durch eine Führungseinrichtung für eine Schubkette und ein über Haltelaschen mit der Schubkette verbundenes Sieb;
- Fig. 21: eine schematische Darstellung einer Einrichtung zum Erden eines Siebes mittels eines am Sieb befestigten Kabels;
- Fig. 22: eine schematische Seitenansicht einer Abreinigungsvorrichtung für ein Sieb, welche eine Druckluftdüse und eine Absaugeinrichtung umfaßt;
- Fig. 23: einen schematischen Querschnitt durch die Abreinigungsvorrichtung aus Fig. 22;
- Fig. 24: einen schematischen Querschnitt durch eine Abreinigungsvorrichtung, die eine Bürste und eine Absaugeinrichtung umfaßt;
- Fig. 25: eine schematische Seitenansicht der Abreinigungsvorrichtung aus Fig. 24;
- Fig. 26: eine schematische Seitenansicht einer Abreinigungsvorrichtung, die eine Absaugeinrichtung zum Absaugen von Overspray aus einem aufgerollten Sieb umfaßt; und
- Fig. 27: eine schematische perspektivische Darstellung der Abreinigungsvorrichtung aus Fig. 26.

Gleiche oder funktional äquivalente Elemente sind in allen Figuren mit denselben Bezugszeichen bezeichnet.

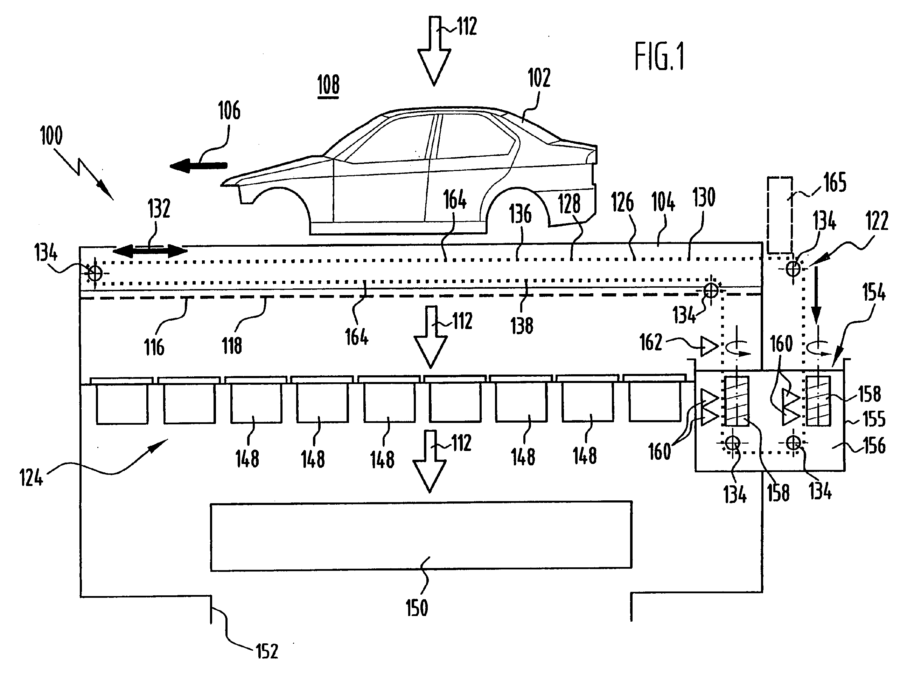

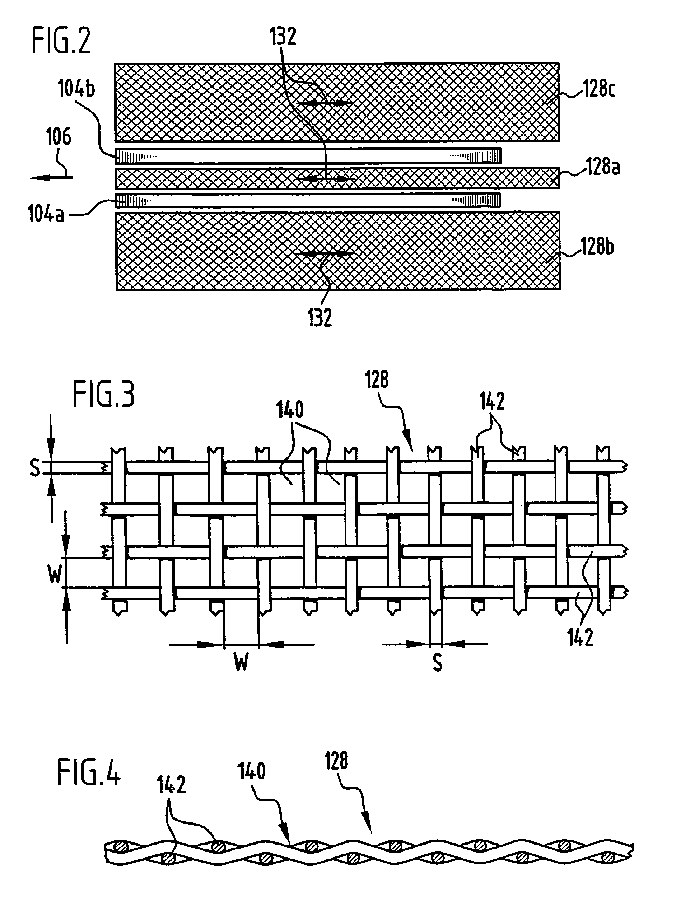

Eine in den Fig. 1 und 2 dargestellte, als Ganzes mit 100 bezeichnete Anlage zum Spritzlackieren von Fahrzeugkarosserien 102 umfaßt eine rein schematisch dargestellte Fördervorrichtung 104, mittels welcher die Fahrzeugkarosserien 102 längs einer Förderrichtung 106 durch einen Lackierbereich 108 bewegt werden können.

Die Fördervorrichtung 104 kann beispielsweise als invertierter Kreisförderer ausgebildet sein.

Insbesondere kann die Fördervorrichtung 104 zweiteilig ausgebildet sein und - wie am besten aus Fig. 2 zu ersehen ist - zwei sich parallel zur Förderrichtung 106 erstreckende Förderstränge 104a und 104b umfassen, welche in einer zur Förderrichtung 106 senkrechten horizontalen Richtung voneinander beabstandet sind.

Der Lackierbereich 108 kann beispielsweise der Innenraum einer (nicht dargestellten) Spritzlackierkabine sein.

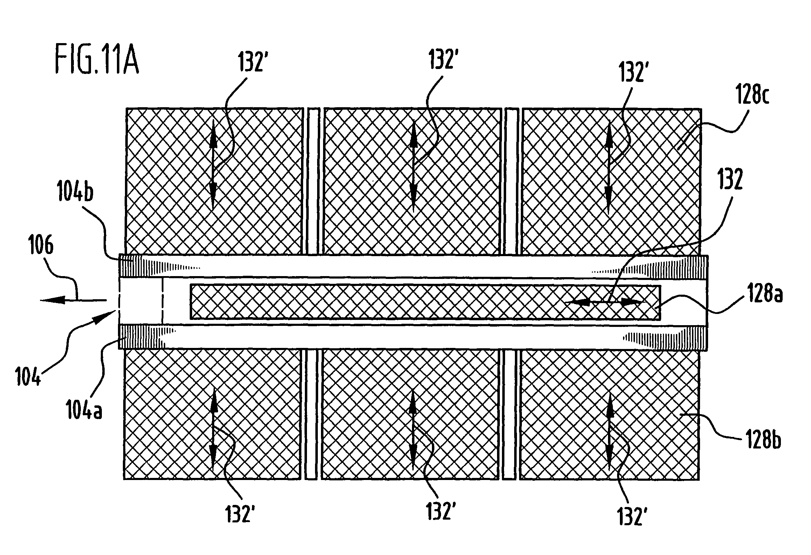

Zu beiden Seiten der Fördervorrichtung 104 sind Spritzlackiereinrichtungen 110 (siehe Fig. 11) angeordnet, beispielsweise in Form von Lackierrobotern.

Mittels einer (nicht dargestellten) Luftstromerzeugungseinrichtung wird ein Luftstrom erzeugt, welcher den Lackierbereich 108 im wesentlichen vertikal von oben nach unten durchsetzt, wie dies in Fig. 1 durch den Pfeil 112 angedeutet ist.

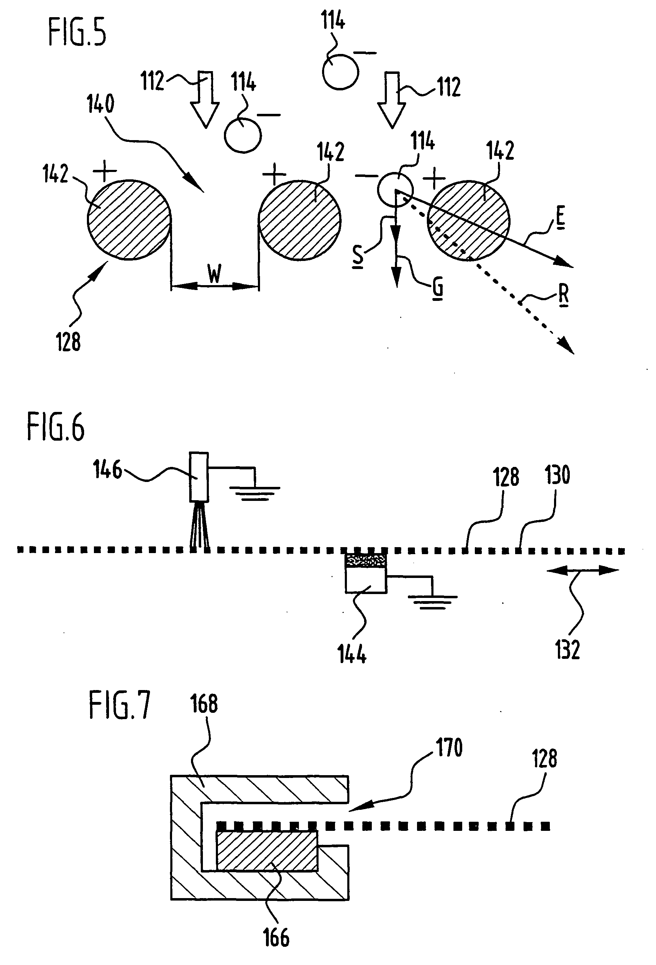

Dieser Luftstrom nimmt im Lackierbereich 108 Lack-Overspray in Form von Overspray-Partikeln 114 (siehe Fig. 5) auf.

Der Begriff "Partikel" umfaßt dabei sowohl feste als auch flüssige Teilchen, insbesondere Tröpfchen.

Wird in der Anlage 100 ein Naßlack zum Lackieren verwendet, so besteht der Naßlack-Overspray aus Lacktröpfchen.

Wird in der Anlage 100 ein Pulverlack verarbeitet, so besteht der Lack-Overspray aus festen Pulverteilchen.

Die meisten der Overspray-Partikel weisen eine größte Abmessung im Bereich von ungefähr 5 µm bis ungefähr 40 µm auf bei Pulverlack und im Bereich von ungefähr 1 µm bis ungefähr 100 µm bei Naßlack auf.

Die Overspray-Partikel 114 werden bei der Zerstäubung in den Spritzlackiervorrichtungen elektrisch geladen und weisen üblicherweise eine negative Polarität auf.

Der Luftstrom 112 verläßt die Spritzkabine durch einen Kabinenboden 116, welcher durch luftdurchlässige Gitterroste 118 gebildet ist.

Die Anlage 100 umfaßt ferner eine als Ganzes mit 120 bezeichnete Vorrichtung zum Abtrennen von Lack-Overspray aus dem Luftstrom 112, welche zweistufig ausgebildet ist und eine erste Abtrennstufe 122, welche zuerst von dem Luftstrom 112 durchströmt wird, und eine der ersten Abtrennstufe 122 nachgeschaltete zweite Abtrennstufe 124 umfaßt.

Die erste Abtrennstufe 122 ist als eine trockene Abtrennstufe ausgebildet und umfaßt als Abtrennelement 126 ein Sieb 128, das als eine flache Siebbahn 130 ausgebildet ist, die sich längs einer Längsrichtung 132 erstreckt und deren Endbereiche so miteinander verbunden sind, daß sich ein ringförmig geschlossenes, umlaufendes Sieb 128 ergibt.

Dieses ringförmig geschlossene Sieb ist, wie aus Fig. 1 zu ersehen ist, über mehrere Umlenktrommeln 134 geführt, die um senkrecht zur Förderrichtung 106 ausgerichtete horizontale Achsen drehbar sind.

Eine oder mehrere der Umlenktrommeln 134 sind mittels einer (nicht dargestellten) Antriebseinrichtung zu einer Drehbewegung antreibbar, so daß das Sieb 128 mittels der angetriebenen Umlenktrommel 134 zu einer Umlaufbewegung in seiner Längsrichtung 132 antreibbar ist, wobei diese Umlaufbewegung kontinuierlich oder intermittierend erfolgen kann.

Wie aus Fig. 1 zu ersehen ist, erstreckt sich ein erster Abschnitt 136 des Siebs 128 zwischen der Förderkontur der Fahrzeugkarosserien 102 und dem Kabinenboden 116.

Ein zweiter Abschnitt 138 des Siebs 128 erstreckt sich parallel zu dem ersten Abschnitt 136 zwischen dem ersten Abschnitt 136 des Siebs 128 und dem Kabinenboden 116.

Der Luftstrom 112 durchsetzt beide Abschnitte 136 und 138 des Siebs 128.

Das Sieb 128 ist beispielsweise aus einem Drahtgewebe oder Drahtgitter gebildet, wie es in den Fig. 3 und 4 dargestellt ist.

Der hierbei verwendete Draht besteht aus einem elektrisch leitfähigen, vorzugsweise metallischen, Material.

Besonders günstig ist, wenn als Material für den Draht ein korrosionsbeständiges Material, beispielsweise ein Edelstahlmaterial, verwendet wird.

Die Drähte des Drahtgewebes oder Drahtgitters bilden ein Gitter mit beispielsweise im wesentlichen quadratischen Maschen mit einer Maschenweite W im Bereich von beispielsweise ungefähr 1 µm bis ungefähr 1.000 µm und mit die Maschen voneinander trennenden Stegen 142, deren Stegbreite dem Durchmesser des verwendeten Drahts entspricht und beispielsweise im Bereich von ungefähr 1 µm bis ungefähr 500 µm liegt.

Der Anteil der offenen Siebfläche, das heißt die von den Maschen 140 eingenommene Fläche, an der gesamten Siebfläche beträgt mindestens 20 %, vorzugsweise mindestens 25 %, insbesondere mindestens 30 %, so daß das Sieb 128 eine offene Struktur aufweist, durch welche der Luftstrom 112 mit nur geringem Druckverlust hindurchtreten kann.

Der hydraulische Durchmesser der Maschen 140, definiert als der Quotient aus der vierfachen Maschenfläche einerseits und dem Umfang der Masche andererseits, entspricht im Falle quadratischer Maschen der Maschenweite W. Wie aus Fig. 4 zu ersehen ist, entspricht die Dicke D des Siebes 128 ungefähr dem doppelten Durchmesser des verwendeten Drahtes und liegt somit vorzugsweise im Bereich von ungefähr 2 µm bis ungefähr 1.000 µm.

Um den Druckverlust beim Durchströmen des Siebes 128 gering zu halten, ist vorzugsweise vorgesehen, daß die Dicke D des Siebes 128 kleiner ist als ungefähr das Zehnfache, vorzugsweise kleiner als ungefähr das Fünffache, insbesondere ungefähr kleiner als ungefähr das Doppelte der Maschenweite W.

Beim Hindurchströmen des Luftstroms 112, der mit den Overspray-Partikeln 114 beladen ist, werden beispielsweise 80 bis 90 Gewichtsprozent des Lack-Oversprays an dem Sieb 128 abgeschieden.

Diese Abscheidung am Sieb 128 erfolgt überwiegend über eine elektrostatische Wechselwirkung zwischen den negativ geladenen Overspray-Partikeln 114 einerseits und dem elektrisch leitfähigen Material des Siebes 128 andererseits, in welchem sich aufgrund des elektrischen Influenzeffektes positive Spiegelladungen ausbilden, welche die negativ geladenen Overspray-Partikel 114 anziehen.

Auf die Overspray-Partikel 114 im Luftstrom 112 wirkt somit eine vertikal nach unten gerichtete Strömungskraft S, eine ebenfalls vertikal nach unten gerichtete Gewichtskraft G und eine zum jeweils nächstliegenden Steg des Siebes 128 gerichtete elektrostatische Anziehungskraft E (siehe Fig. 5). Für Overspray-Partikel 114 mit einer Größe im Bereich von ungefähr 5 µm bis ungefähr 20 µm ist die elektrostatische Anziehungskraft E deutlich größer als die auf diese Partikel wirkenden Strömungs- und Gewichtskräfte, weshalb die Resultierende R dieser Kräfte im wesentlichen auf den nächstliegenden Steg 142 des Siebes 128 hin gerichtet ist, so daß die Overspray-Partikel 114 zu dem betreffenden Steg 142 hin abgelenkt werden, sich beim Auftreffen auf dem Sieb 128 entladen und dann aufgrund von Adhäsionskräften an dem Sieb 128 haften bleiben.

Auf diese Weise ist es möglich, mittels des Siebes 128 insbesondere auch solche Overspray-Partikel 114 aus dem Luftstrom 112 abzutrennen, welche eine größte Abmessung aufweisen, die deutlich kleiner ist als die Maschenweite des Siebes 128.

Die Abtrennwirkung des Siebes 128 geht also weit über die normale mechanische Abtrennwirkung eines Siebes hinaus.

Um zu verhindern, daß sich das Sieb 128 während des Abtrennvorgangs elektrisch gleichsinnig wie die Overspray-Partikel 114 auflädt, wird das Sieb 128 während des Abtrennvorgangs geerdet, wobei diese Erdung beispielsweise mittels eines Schleifkontaktes 144 oder einer Kontaktbürste 146 erfolgen kann, welche mit der Oberseite oder der Unterseite des Siebes 128 in elektrisch leitendem Kontakt stehen, wie dies in Fig. 6 schematisch dargestellt ist.

Um die elektrostatische Anziehung zwischen dem Sieb 128 und den Overspray-Partikeln 114 weiter zu erhöhen, kann auch vorgesehen sein, daß das Sieb 128 über elektrisch leitende Kontakte, wie beispielsweise einen Schleifkontakt oder eine Kontaktbürste, auf ein elektrisches Potential gelegt wird, welches der Polarität der Overspray-Partikel 114 entgegengesetzt ist.

Im Falle von negativ polarisierten Overspray-Partikeln 114 kann also vorgesehen sein, daß das Sieb 128 auf ein positives Potential gelegt wird.

Nachdem ein Großteil des Lack-Oversprays aus der Luftströmung 112 an dem Sieb 128, und zwar an dem ersten Abschnitt 136 oder an dem zweiten Abschnitt 138 desselben, abgeschieden worden ist, tritt der Luftstrom 112 mit dem darin verbliebenen Lack-Overspray nach unten durch die Gitterroste 118 in die zweite Abtrennstufe 124 der Vorrichtung 120 ein, welche ebenfalls als eine trockene Abtrennstufe ausgebildet ist und beispielsweise eine Mehrzahl von Beutelfiltern oder Taschenfiltern 148 umfaßt, welche im Strömungsweg des Luftstroms 112 angeordnet sind. Der nach Passieren der ersten Abtrennstufe 122 noch in dem Luftstrom 112 verbliebene Lack-Overspray wird in der zweiten Abtrennstufe 124 zurückgehalten, so daß der Luftstrom 112, der aus der zweiten Abtrennstufe 124 austritt, im wesentlichen frei von Lack-Overspray ist und mittels einer horizontalen Absaugeinrichtung 150 und/oder mittels einer vertikalen Absaugeinrichtung 152 aus der Vorrichtung 120 zur Abscheidung des Lack-Oversprays abgesaugt werden kann.

Diese abgesaugte Luft kann entweder an die Umgebung abgegeben werden oder aber der Einrichtung zur Erzeugung des Luftstroms 112 wieder zugeführt werden, um so einen Umluftstrom durch den Lackierbereich 108 und die darunter angeordnete Vorrichtung 120 zu erzeugen.

Da die Vorrichtung 120 zum Abtrennen des Lack-Oversprays ausschließlich trockene Abtrennstufen und keine Auswaschanlage, in welcher der Luftstrom mit einer Waschflüssigkeit in Kontakt kommt, aufweist, wird dem Luftstrom 112 beim Abtrennen des Lack-Oversprays keine Feuchtigkeit zugeführt, so däß auf eine ansonsten notwendige, energieintensive Entfeuchtung der aus der Vorrichtung 120 abgesaugten Luft auch bei Umluftbetrieb verzichtet werden kann.

Da 80 bis 90 Gewichtsprozent des Lack-Oversprays bereits in der ersten Abtrennstufe 122 der Vorrichtung 120 aus dem Luftstrom 112 abgetrennt werden, ist die in der zweiten Abtrennstufe 124 abzuscheidende Lackmenge vergleichsweise gering, weshalb die Filter der zweiten Abtrennstufe 124 eine hohe Standzeit aufweisen.

Das Sieb 128 der ersten Abtrennstufe 122 wird hingegen mittels einer Abreinigungsvorrichtung 154 im laufenden Betrieb der Anlage 100 kontinuierlich oder taktweise von den abgeschiedenen Overspray-Partikeln 114 befreit.

Diese Abreinigungsvorrichtung 154 kann beispielsweise als eine nasse Abreinigungsvorrichtung ausgebildet sein, wie dies in Fig. 1 dargestellt ist.

Die Abreinigungsvorrichtung 154 umfaßt einen Reinigungsbehälter 155, der mit einem Reinigungsbad 156 aus Wasser und/oder aus einem Lösemittel gefüllt ist.

Das Sieb 128 verläuft durch das Reinigungsbad 156 hindurch, so daß durch Hindurchbewegen des Siebes 128 durch das Reinigungsbad 156 die an dem Sieb 128 anhaftenden Overspray-Partikel 114 durch das flüssige Reinigungsmittel des Reinigungsbads 156 von dem Sieb 128 abgelöst werden.

Die Reinigungswirkung des Reinigungsbads 156 wird durch rotierende Bürsten 158 und durch in dem Reinigungsbad 156 angeordnete Reinigungsdüsen 160, welche einen quer zu den Hauptflächen des Siebes 128 gerichteten Strom des flüssigen Reinigungsmittels durch das Sieb 128 hindurch erzeugen und auf der jeweils einer der rotierenden Bürsten 158 gegenüberliegenden Seite des Siebes 128 angeordnet sind, mechanisch unterstützt.

Bei der in Fig. 1 dargestellten Ausführungsform der Anlage 100 läuft das Sieb 128 im Uhrzeigersinn um, so daß es auf der rechten Seite des Reinigungsbehälters 155 in das Reinigungsbad 156 eintaucht und auf der linken Seite des Reinigungsbehälters 155 aus dem Reinigungsbad 156 austaucht.

Um das Sieb 128 nach dem Austauchen aus dem Reinigungsbad 156 zu trocknen, ist oberhalb des Spiegels des Reinigungsbads 156 eine Luftdüse 162 vorgesehen, durch welche trockene und erwärmte Luft gegen das Sieb 128 geblasen wird.

Somit kann das Sieb 128 während des Betriebs der Anlage 100 von dem abgeschiedenen Lack-Overspray gereinigt werden, indem die im Strömungsweg des Luftstroms 112 angeordneten und somit als Partikelsammelbereiche 164 dienenden Abschnitte des Siebes 128 nach erfolgter Abscheidung durch das Reinigungsbad 156 bewegt werden.

Das Hindurchführen der Partikelsammelbereiche 164 durch die Abreinigungsvorrichtung 154 erfolgt dabei durch die Umlaufbewegung des Siebes 128, welche kontinuierlich oder auch taktweise so erfolgen kann, daß das Sieb nach einer gewissen Overspray-Sammelzeit um eine Strecke, welche beispielsweise der Länge der Partikelsammelbereiche 164 entspricht, in seiner Längsrichtung 132 weiterbewegt und dann wieder stillgesetzt wird.

Um zumindest einen Teil des Oversprays sortenrein von dem Sieb 128 lösen und einer Wiederverwertung zuführen zu können, ist bei einer Variante der Vorrichtung 120 vor dem Reinigungsbad 156 eine (in Fig. 1 in gebrochenen Linien schematisch dargestellte) Abstreifvorrichtung 165 vorgesehen, mittels welcher an dem Sieb 128 abgeschiedener Overspray von der Sieboberfläche abgehoben und von dort einem der jeweils abgeschiedenen Overspray-Sorte zugeordneten Sammelbehälter zugeführt werden kann.

Wie aus der Draufsicht der Fig. 2 zu ersehen ist, umfaßt die Vorrichtung 120 nicht nur ein einziges Sieb 128, sondern mehrere, beispielsweise drei, solcher Siebe, wobei ein mittleres Sieb 128a zwischen den beiden Fördersträngen 104a und 104b der Fördervorrichtung 104, ein weiteres Sieb 128b links neben dem linken Förderstrang 104a und ein weiteres Sieb 128c rechts neben dem rechten Förderstrang 104b angeordnet ist, so daß im wesentlichen der gesamte Kabinenboden 116 von den Sieben 128a, 128b und 128c überdeckt wird.

Alle drei Siebe 128a, 128b und 128c sind zu einer Umlaufbewegung in ihrer jeweils parallel zur Förderrichtung 106 ausgerichteten Längsrichtung 132 antreibbar.

Alternativ zu der in Fig. 1 dargestellten Anordnung der Siebe 128 könnte auch vorgesehen sein, daß die Siebe 128 unterhalb der Gitterroste 118 des Kabinenebodens 116 verlaufen, um den Kabinenboden 116 auch im Bereich der Siebe 128 begehbar zu halten.

Um zu gewährleisten, daß jedes Sieb 128 im wesentlichen ebene Hauptflächen (Oberseite und Unterseite) aufweist und über seine gesamte Länge hinweg im wesentlichen dieselbe Breite hat, kann vorgesehen sein, daß die seitlichen Ränder des Siebes 128 mit einer Einfassung oder Verstärkung 166 versehen sind und die Verstärkung 166 an einem Führungsprofil 168, welches sich in der Längsrichtung 132 des Siebes 128 erstreckt, geführt ist.

Bei der in Fig. 7 dargestellten Ausführungsform ist die Verstärkung 166 dabei als ein robustes, flexibles Band aus einem metallischen Material oder aus einem Kunststoffmaterial ausgebildet, welches an einem seitlichen Rand des Siebes 128 festgelegt ist, beispielsweise durch Verklebung oder Verschweißung.

Diese Verstärkung 166 ist in einem im wesentlichen rechteckigen Führungsprofil 168 geführt, welches einen Längsschlitz 170 für den Durchtritt des Siebes 128 aufweist, wobei die Höhe des Längsschlitzes 170 vorzugsweise kleiner ist als die Dicke der Verstärkung 166, so daß die Verstärkung 166 nicht aus dem Führungsprofil 168 herausspringen kann.

Die Dicke der Verstärkung 166 kann beispielsweise ungefähr 10 mm betragen.

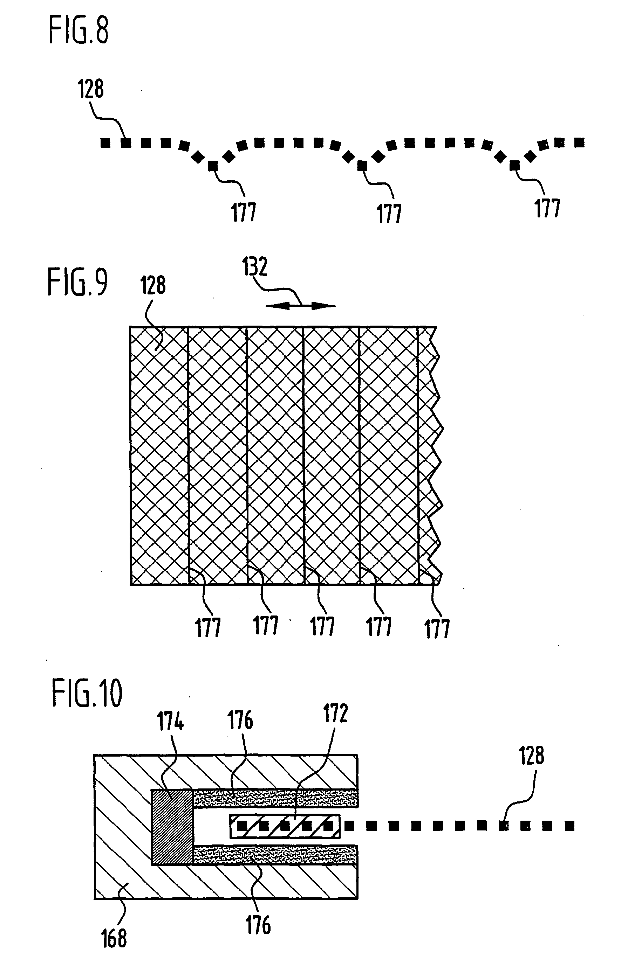

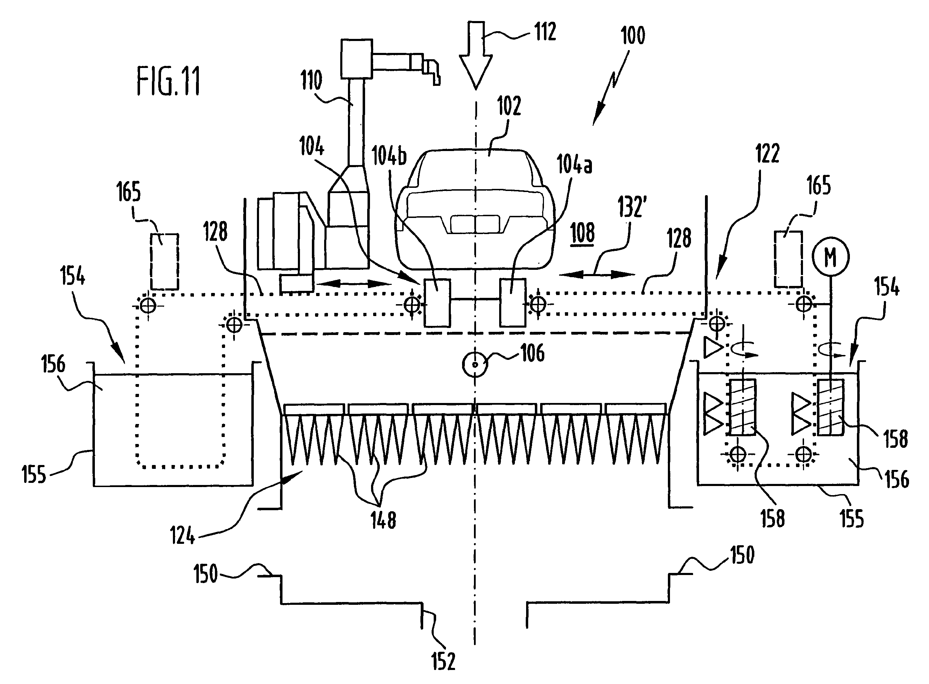

Eine alternative Möglichkeit zur Führung der seitlichen Ränder des Siebes 128 ist in Fig. 10 dargestellt. Hierbei ist der seitliche Rand des Siebes 128 mit einer dünnen, flexiblen Einfassung 172 aus einem ferromagnetischen Material versehen, welche in ein Führungsprofil 168 mit einem im wesentlichen U-förmigen Querschnitt eintaucht.

Zwischen den Schenkeln des U-förmigen Führungsprofils 168 ist ein sich in der Längsrichtung des Führungsprofils 168 erstreckendes Magnetelement 174 angeordnet, welches das ferromagnetische Material der Einfassung 172 anzieht und somit das Sieb 128 in Querrichtung gespannt hält.

An der Unterseite des oberen Schenkels und an der Oberseite des unteren Schenkels des Führungsprofils 168 ist dabei jeweils eine Gleitschicht 176 vorgesehen, an welcher die Einfassung 172 des Siebes 128 bei geringem Gleitreibungswiderstand abgleiten kann.

Eine weitere Möglichkeit zur mechanischen Stabilisierung des Siebes 128 ist in den Fig. 8 und 9 dargestellt und besteht darin, das Sieb 128 mit quer, vorzugsweise senkrecht, zu seiner Längsrichtung 132 verlaufenden Sicken 177 zu versehen, welche die mechanische Festigkeit des Siebes 128 erhöhen und somit eine unerwünschte Einschnürung des Siebes 128 verhindern.

Eine in den Fig. 11 und 11A dargestellte zweite Ausführungsform einer Anlage 100 zum Spritzlackieren von Fahrzeugkarosserien 102 unterscheidet sich von der vorstehend beschriebenen ersten Ausführungsform dadurch, daß die erste Abtrennstufe 122 der Vorrichtung 120 zum Abtrennen von Lack-Overspray aus dem Luftstrom 112 neben dem mittleren Sieb 128a, welches zwischen den beiden Strängen 104a und 104b der Fördervorrichtung 104 angeordnet ist und längs seiner parallel zur Förderrichtung 106 ausgerichteten Längsrichtung 132 beweglich ist, weitere Siebe 128b, die links von dem linken Förderstrang 104a angeordnet sind, und Siebe 128c, die rechts von dem rechten Förderstrang 104b angeordnet sind, umfaßt, wobei diese weiteren Siebe 128b und 128c senkrecht zur Förderrichtung 106 ausgerichtete Längsrichtungen 132' aufweisen, längs welcher diese weiteren Siebe 128b, 128c zu einer Umlaufbewegung antreibbar sind.

Dabei stehen sich jeweils ein Sieb 128b links von der Fördervorrichtung 104 und ein Sieb 128c rechts von der Fördervorrichtung 104 paarweise gegenüber (siehe Fig. 11A).

Die Umlenktrommeln 134 dieser Siebe 128b, 128c sind folglich parallel zur Förderrichtung 106 ausgerichtet, und die Abreinigungsvorrichtungen 154 für diese Siebe 128b, 128c sind nicht an einem vorderen oder hinteren Ende der Vorrichtung 120 zum Abtrennen von Lack-Overspray, sondern seitlich neben der Lackierkabine und dem Lackierbereich 108 angeordnet, wie dies in Fig. 11 dargestellt ist.

Im übrigen stimmt die in den Fig. 11 und 11A dargestellte zweite Ausführungsform einer Anlage 100 hinsichtlich Aufbau und Funktion mit der ersten Ausführungsform überein, auf deren vorstehende Beschreibung insoweit Bezug genommen wird.

Die beiden vorstehend beschriebenen Ausführungsformen einer Anlage 100 eignen sich sowohl für das Lackieren mit Naßlack als auch für das Lackieren mit Pulverlack, sind jedoch vorzugsweise für das Lackieren mit Naßlack vorgesehen.

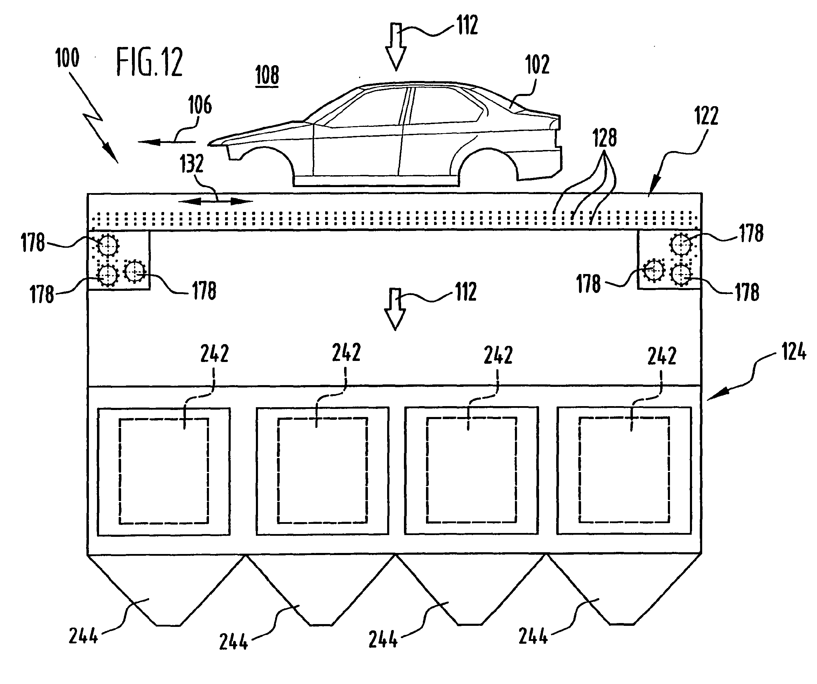

Eine in den Fig. 12 bis 14 dargestellte dritte Ausführungsform einer Anlage 100 zum Spritzlackieren von Fahrzeugkarosserien 102 ist hingegen vorzugsweise für das Lackieren mit Pulverlack vorgesehen.

Diese Anlage 100 unterscheidet sich von den beiden vorstehend beschriebenen insbesondere dadurch, daß die erste Abtrennstufe 122 der Vorrichtung 120 zum Abscheiden von Lack-Overspray aus dem Luftstrom 112 nicht nur jeweils ein Sieb 128 aufweist, das in den Strömungsweg des Luftstroms 112 eingebracht werden kann, sondern jeweils mehrere verschiedene, beispielsweise jeweils sechs, Siebe 128 umfaßt, die abwechselnd an jeweils derselben Stelle in den Strömungsweg des Luftstroms 112 eingebracht werden können.

Dadurch ist es möglich, zeitlich nacheinander verschiedene Sorten von Lack-Overspray, insbesondere verschiedenfarbigen Lack-Overspray, getrennt auf verschiedenen Sieben 128 abzuscheiden und somit unterschiedliche Sorten von Lack-Overspray sortenrein aus dem Luftstrom 112 abtrennen und anschließend einer Wiederverwertung zuführen zu können.

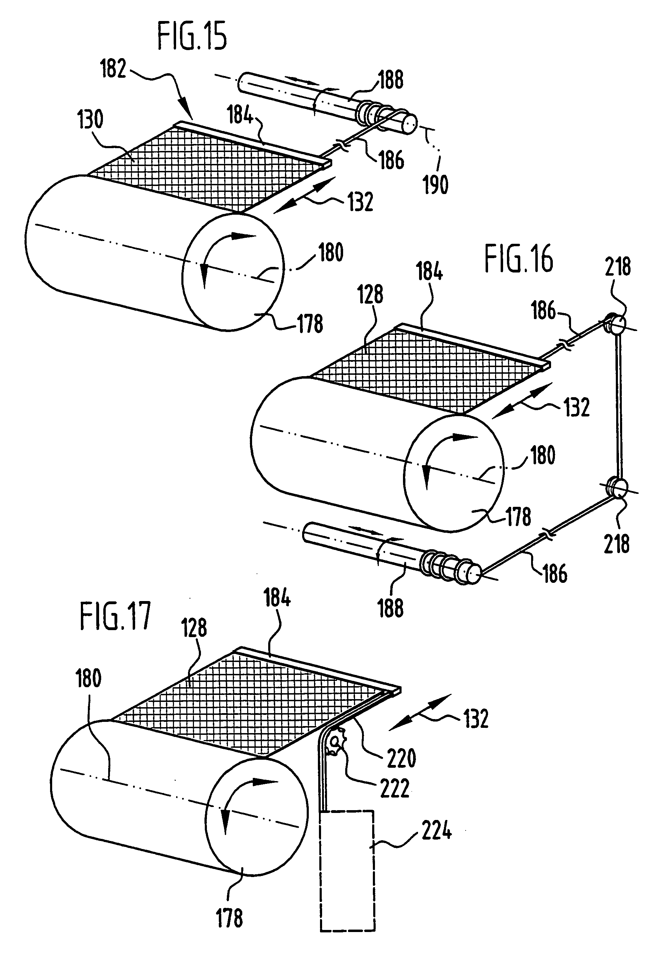

Wie am besten aus den Fig. 12 und 15 zu ersehen ist, ist jedes der Siebe 128 in einem Ruhezustand, in dem das betreffende Sieb 128 nicht zur Abscheidung von Lack-Overspray verwendet wird, auf jeweils einer Trommel 178 aufgerollt, welche mittels eines motorischen Antriebs um eine horizontale, quer zur Förderrichtung 106 ausgerichtete Drehachse 180 drehbar ist und jeweils an einem der Endbereiche der Vorrichtung 120 angeordnet ist.

Die Siebe 128 sind bei dieser Ausführungsform der Anlage 100 nicht als ringförmig geschlossene, umlaufende Siebbahnen 130, sondern als Siebbahnen 130 mit einem freien Endbereich 182 ausgebildet, wobei der Endbereich 182 mit einer sich quer zur Längsrichtung 132 der Siebbahn 130 erstreckenden Halteleiste 184 abschließt. An dieser Halteleiste 184 ist ein Zugseil 186 festgelegt, das sich parallel zur Längsrichtung 132 der Siebbahn 130 und parallel zur Förderrichtung 106 von dem einen Endbereich der Vorrichtung 120 bis zu dem entgegengesetzten Endbereich der Vorrichtung 120 erstreckt und an dem entgegengesetzten Endbereich auf eine Welle 188 aufgewickelt ist, die mittels eines (nicht dargestellten) motorischen Antriebs um eine parallel zur Drehachse 180 der Trommel 178 ausgerichtete Drehachse 190 drehbar und in axialer Richtung verschiebbar ist, so daß die Welle 188 relativ zu dem Zugseil 186 beim Aufwickeln des Zugseils 186 verschoben werden kann, wodurch die einzelnen Windungen des Zugseils 186 nicht aufeinander liegen, sondern auf der Mantelfläche der Welle 188 nebeneinander liegen und eine Schraubenwendel bilden. Auf diese Weise wird erreicht, daß der Aufwickeldurchmesser des Zugseils 186 unabhängig von der Menge des bereits aufgewickelten Zugseils 186 unverändert bleibt und somit - bei konstanter Drehzahl der Welle 188 - die Halteleiste 184 des Siebs 128 stets mit konstanter Geschwindigkeit gezogen wird.

Durch Aufwickeln des Zugseils 186, das beispielsweise als Stahlseil ausgebildet sein kann, kann somit ein Partikelsammelbereich 164 des Siebs 128 von der Trommel 178 abgewickelt und in eine Arbeitsstellung im Strömungsweg des Luftstroms 112 gebracht werden, um Overspray-Partikel 114 einer bestimmten Farbe an dem Sieb 128 abzuscheiden.

Wenn in dem Lackierbereich 108 die Verwendung dieser Farbe beendet wird, so wird das betreffende Sieb 128 durch Drehen der Trommel 178 wieder auf die Trommel 178 aufgewickelt und so aus der Arbeitsstellung in die Ruhestellung zurück bewegt.

Während das zuletzt zur Abscheidung benutzte Sieb 128 in die Ruhestellung zurück bewegt wird, wird bereits ein anderes Sieb 128, das zur Abscheidung des Lack-Oversprays der nächsten zu verwendenden Farbe benutzt werden soll, durch Aufwickeln des zugehörigen Zugseils 186 in die Arbeitsstellung gebracht, worauf eine neue Betriebsphase der Vorrichtung 120 mit Abscheidung einer andersfarbigen Sorte von Overspray-Partikeln 114 beginnt.

Beim Zurückbewegen eines mit Overspray-Partikeln 114 beladenen Siebes 128 in die Ruhestellung wird das betreffende Sieb 128 sogleich mittels einer dem betreffenden Sieb 128 zugeordneten Abreinigungsvorrichtung 192 abgereinigt.

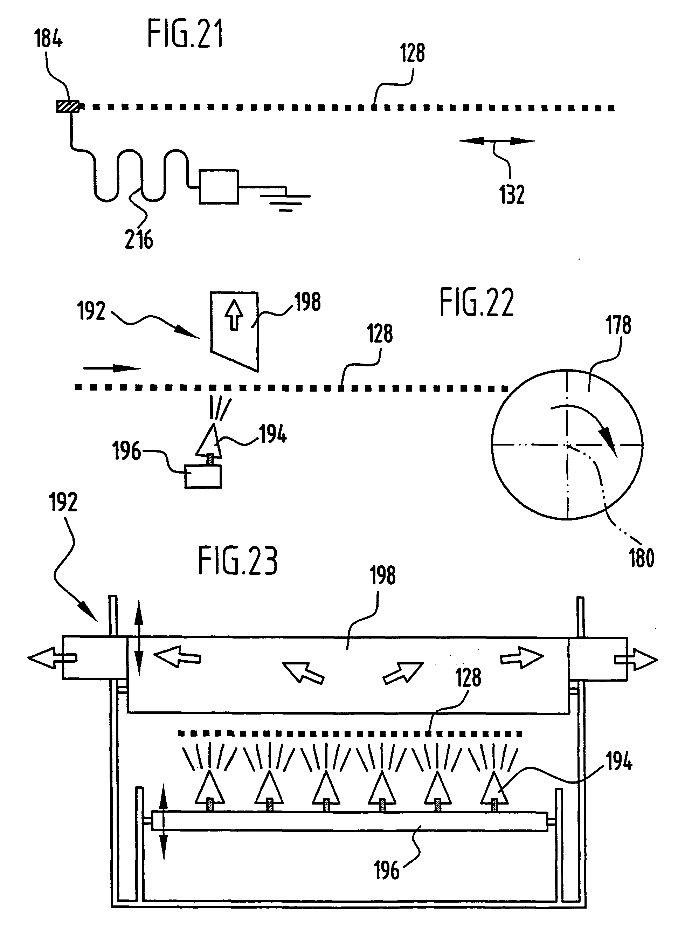

Wie aus den Fig. 22 und 23 zu ersehen ist, kann diese Abreinigungsvorrichtung 192 insbesondere unterhalb des Siebs 128 angeordnete Druckluftdüsen 194 umfassen, welche schwenkbar an einem sich quer über die gesamte Breite des Siebes 128 erstreckenden Druckluftkanal 196 angeordnet sind und mittels welcher das Sieb 128 mit Druckluft beaufschlagbar ist, durch die die abgeschiedenen Overspray-Partikel 114 von dem Sieb 128 abgeblasen werden.

Die von dem Sieb abgeblasenen Overspray-Partikel 114 werden mittels einer Absaugeinrichtung 198, die sich quer über die gesamte Breite des Siebes 128 erstreckt, abgesaugt und einem Overspray-Sammelbehälter zugeführt, von wo der sortenrein gesammelte Overspray dann für eine Wiederverwertung entnommen werden kann.

Der Druckluftkanal 196 und die Absaugeinrichtung 198 sind jeweils mittels eines (nicht dargestellten) motorischen Antriebs quer zu den Hauptflächen (Oberseite und Unterseite) des Siebes 128 verfahrbar, so daß die Druckluftdüsen 194 und die Absaugeinrichtung 198 zum Abreinigen des Siebes 128 nahe an dessen Hauptflächen herangefahren werden können und nach erfolgter Abreinigung wieder von den Hauptflächen des Siebes 128 entfernt werden können, um die Bewegung anderer Siebe 128 der Vorrichtung 120 nicht zu behindern.

Alternativ oder ergänzend zu einer Ablösung der Overspray-Partikel 114 von dem Sieb 128 mittels Druckluftdüsen 194 kann auch vorgesehen sein, daß die Abreinigungsvorrichtung 192 eine rotierende Bürste 200 umfaßt, welche sich quer über die gesamte Oberseite des Siebes 128 erstreckt und mittels eines Drehantriebs um ihre Längsachse drehbar ist, wobei sich die Borsten an der Oberseite der Bürste dort, wo sie in Kontakt mit dem Sieb 128 stehen, gleichsinnig mit dem Sieb 128 bewegen.

Durch die rotierende Bürste 200 werden die Overspray-Partikel 114 mechanisch von dem Sieb 128 gelöst, so daß sie anschließend mittels der Absaugeinrichtung 198 dem jeweiligen Overspray-Sammelbehälter zugeführt werden können.

Alternativ oder ergänzend zu einer Abreinigung des Siebes 128 bei dem Zurückbewegen des Siebes 128 von der Arbeitsstellung in die Ruhestellung kann auch vorgesehen sein, daß die Overspray-Partikel 114 im Ruhezustand, in dem das Sieb 128 auf die Trommel 178 aufgewickelt ist, von dem Sieb 128 abgereinigt werden.

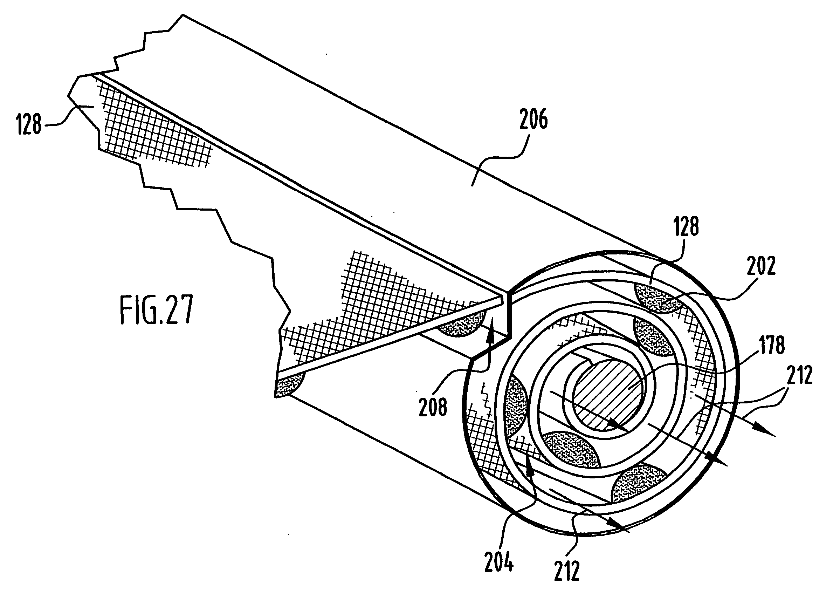

Dazu ist das Sieb 128 mit quer über eine seiner Hauptflächen hinweg verlaufenden Abstandshalterleisten 202 versehen, welche beispielsweise einen kreisabschnittsförmigen Querschnitt aufweisen (siehe Fig. 27) und bewirken, daß die Wickellagen des Siebs 128 im aufgewickelten Zustand nicht direkt aneinander anliegen, sondern vielmehr zwischen einander benachbarten Wickellagen ein Zwischenraum 204 verbleibt.

Ferner ist die Trommel 178 mit dem aufgewickelten Sieb 128 von einem im wesentlichen zylindrischen Gehäuse 206 umgeben, welches einen axialen Schlitz 208 für den Durchtritt des Siebs 128 aus dem Gehäuse 206 aufweist.

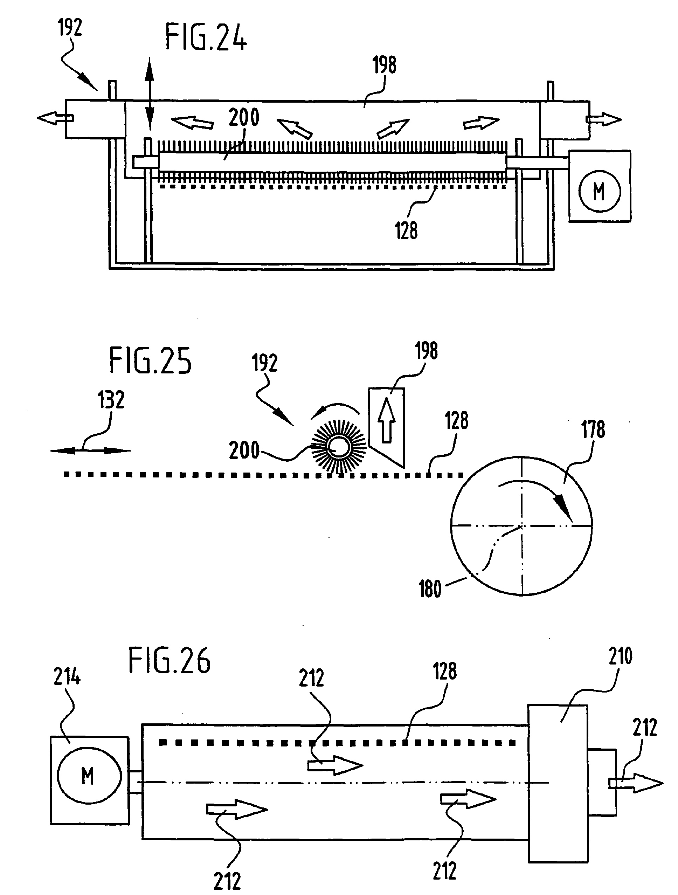

Eine Stirnseite des Gehäuses 206 ist an eine Absaugeinrichtung 210 angeschlossen, mittels welcher eine das Gehäuse 206 und insbesondere die Zwischenräume 204 in axialer Richtung des Gehäuses 106 durchsetzende Luftströmung 212 erzeugbar ist, welche die Overspray-Partikel von dem Sieb 128 löst und dem betreffenden Overspray-Sammelbehälter zuführt (siehe Fig. 26).

An der der Absaugeinrichtung 210 entgegengesetzten Stirnseite des Gehäuses 206 ist der Drehantriebsmotor 214 zum Indrehungversetzen der Trommel 178 angeordnet.

Die Siebe 128 der dritten Ausführungsform einer Anlage 100 zum Spritzlackieren von Fahrzeugkarosserien 102 können in derselben Weise wie bei den ersten beiden Ausführungsformen auf Massepotential oder auf ein der Polarität der Overspray-Partikel 114 entgegengesetztes elektrisches Potential gelegt werden, also beispielsweise mittels in Kontakt mit dem betreffenden Sieb 128 stehender Schleifkontakte oder Kontaktbürsten.

Da sich die Siebe 128 bei der dritten Ausführungsform nicht fortlaufend in derselben Richtung bewegen, sondern in ihrer Längsrichtung 132 hin- und herbewegt werden, kann die Erdung bzw. elektrische Kontaktierung eines Siebes 128 alternativ oder ergänzend hierzu auch durch ein fest am Sieb 128, insbesondere an dessen Halteleiste 184, befestigtes Kabel 216 erfolgen, wie dies in Fig. 21 dargestellt ist.

Die Welle 188 zum Aufwickeln des Zugseils 186 kann auch in demselben Endbereich der Vorrichtung 120 zum Abtrennen von Lack-Overspray aus dem Luftstrom 112 wie die Trommel 178, vorzugsweise in unmittelbarer Nähe der Trommel 178, angeordnet sein, wenn das Zugseil 186 um zwei Umlenkrollen 218 geführt ist, welche im entgegengesetzten Endbereich der Vorrichtung 120 angeordnet sind, wie dies in Fig. 16 dargestellt ist.

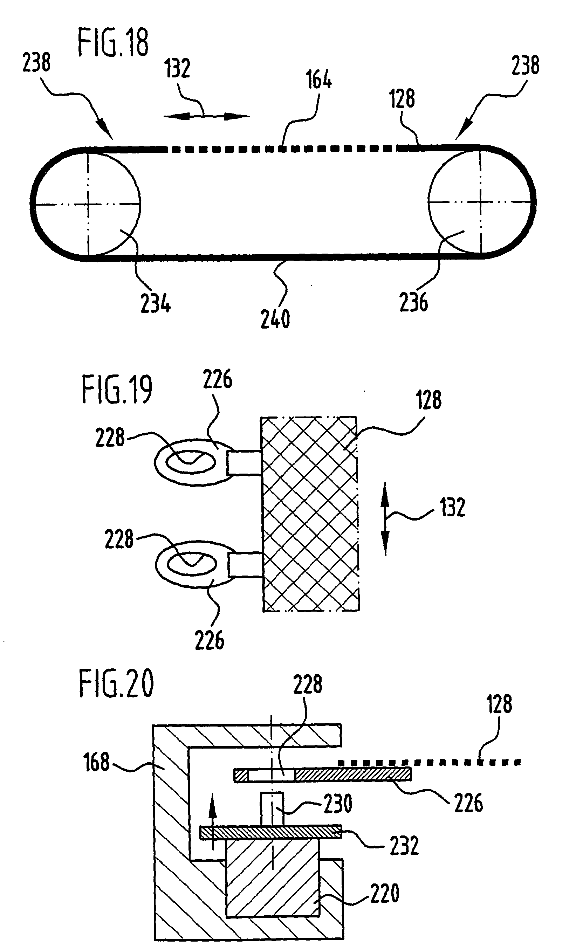

Alternativ oder ergänzend zu einer Bewegung des Siebes 128 von der Ruhestellung in die Arbeitsstellung mittels eines Zugseils 186 kann die Bewegungseinrichtung zum Bewegen des Siebes 128 in die Arbeitsstellung auch eine Schubkette 220 umfassen, deren freies Ende an der Halteleiste 184 des Siebes 128 festgelegt ist, wie dies in Fig. 17 dargestellt ist.

Die Schubkette 220 ist aus Kettengliedern gebildet, die formschlüssig ineinandergreifen und sich spielarm abstützen. Solche Schubketten werden beispielsweise von der Firma Franz Murat KG (GmbH) in Höchst 7, 79871 Eisenbach, Deutschland, vertrieben.

Die Schubkette 220 kann mittels eines mit derselben in Eingriff stehenden Antriebsritzels 222 in ihrer Längsrichtung vor- und zurückbewegt werden. Bei ihrer Vorwärtsbewegung nimmt die Schubkette 220 das Sieb 128 in dessen Arbeitsstellung mit; bei der Zurückbewegung der Schubkette 220 läuft dieselbe in einen Schubketten-Speicherbehälter 224 ein, in welchem sie platzsparend untergebracht ist.

Alternativ oder ergänzend zu einer Festlegung der Schubkette 220 an der endseitigen Halteleiste 184 des Siebes 128 kann auch vorgesehen sein, daß das Sieb 128 an mindestens einem seiner seitlichen Ränder mit Haltelaschen 226 versehen ist, welche jeweils mit einer Einstecköffnung 228 versehen sind, durch welche jeweils ein Einsteckbolzen 230 einsteckbar ist, der über ein Zwischenblech 232 an der Schubkette 220 gehalten ist, wie dies in den Fig. 19 und 20 dargestellt ist.

Die Schubkette 220 ist in einem Führungsprofil 168 in ihrer Längsrichtung verschieblich geführt und nimmt bei seiner solchen Verschiebung über die Einsteckbolzen 230 und die Haltelaschen 226 das betreffende Sieb 128 mit.

Schließlich kann bei einer Variante der dritten Ausführungsform auch noch vorgesehen sein, daß das Sieb 128 nicht auf eine Trommel aufgerollt und von derselben wieder abgerollt wird, sondern daß statt dessen, wie in Fig. 18 dargestellt, das Sieb 128 umlaufend über eine angetriebene Trommel 234 in einem der Endbereiche der Vorrichtung 120 und über eine im entgegengesetzten Endbereich der Vorrichtung 120 angeordnete Umlenktrommel 236 bewegt wird, wobei das Sieb 128 mit konstanter oder mit wechselnder Bewegungsrichtung bewegt werden kann.

Der Partikelsammelbereich 164 des Siebes 128 weist dabei zwei Endbereiche 238 auf, die über Verbindungsseile 240, beispielsweise Stahlseile, miteinander verbunden sind, so daß das Sieb 128 mit den Verbindungsseilen 240 eine ringförmig geschlossene Anordnung ergibt.

In dem in Fig. 18 dargestellten Zustand befindet sich das Sieb 128 in der Arbeitsstellung, in welcher der Partikelsammelbereich 164 des Siebes im Strömungsweg des Luftstroms 212 angeordnet ist, so daß Overspray-Partikel 114 aus dem Luftstrom 112 an dem Partikelsammelbereich 164 abgeschieden werden können.

Um das Sieb 128 in die Ruhestellung zu bringen, wird es mittels der angetriebenen Trommel 234 so weit bewegt, daß der Partikelsammelbereich 164 sich außerhalb des Strömungswegs des Luftstroms 112 befindet, so daß der Luftstrom 112 an den Verbindungsseilen 240 vorbeiströmen und der darin enthaltene Lack-Overspray an einem anderen, nunmehr in Arbeitsstellung befindlichen Sieb 128 abgeschieden werden kann.

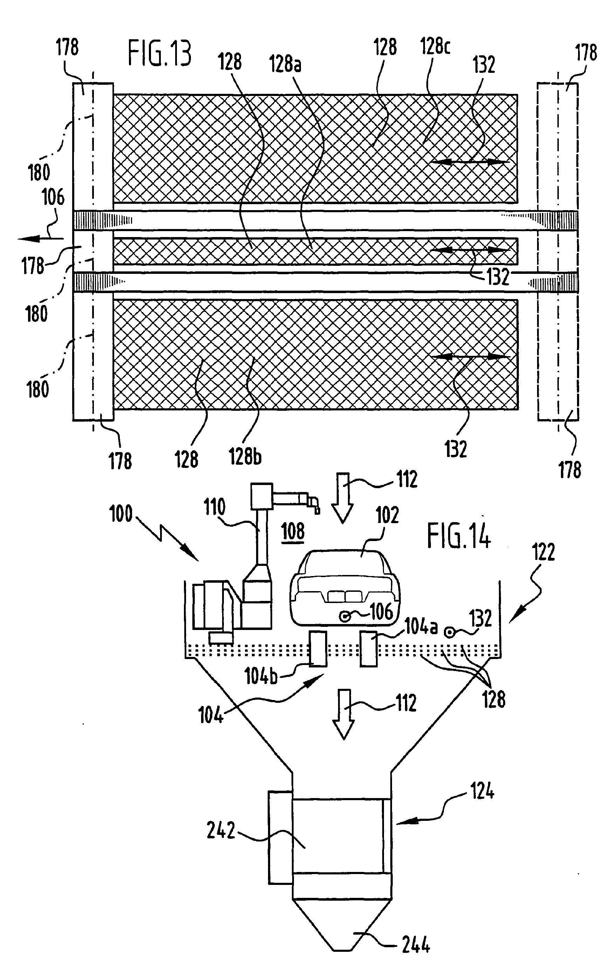

Damit sich die für die Abscheidung verschiedener Overspray-Sorten vorgesehenen Siebe 128 bei ihrer Bewegung in die Arbeitsstellung und zurück in die Ruhestellung nicht gegenseitig behindern, sind diese Siebe 128 in ihrer Arbeitsstellung höhenversetzt zueinander angeordnet. Um dies zu illustrieren, sind in Fig. 12 und 14 in jedem von dem Luftstrom 112 durchströmten Teilbereich der Vorrichtung 120 jeweils drei Siebe 128 übereinander dargestellt. Im tatsächlichen Betrieb der Anlage 100 befindet sich aber üblicherweise nur jeweils ein Sieb 128 in jedem dieser Teilbereiche in der Arbeitsstellung, nämlich dasjenige Sieb 128, welches für die Abscheidung der Lacksorte vorgesehen ist, die zum jeweiligen Zeitpunkt im Lackierbereich 108 verarbeitet wird.

Nach dem Passieren des jeweils in der Arbeitsstellung befindlichen Siebs 128 in der ersten Abtrennstufe 122 der Vorrichtung 120 zum Abtrennen des Lack-Oversprays gelangt der mit den noch nicht abgeschiedenen Overspray-Partikeln beladene Luftstrom 112 in die zweite Abtrennstufe 124 der Vorrichtung 120, welche, wie bei den ersten beiden Ausführungsformen, aus einfachen Beutel- oder Taschenfiltern oder aber, wie in den Fig. 12 und 14 dargestellt, aus regenerierbaren Sinterlamellenfiltern 242 gebildet sein kann.

Die Sinterlamellenfilter 242 können insbesondere einen Lamellen aufweisenden Grundkörper aus gesintertem Polyethylen umfassen, der mit einer Antihaftbeschichtung, insbesondere einer Polytetrafluorethylen-Beschichtung, versehen ist.

An den Lamellen des Grundkörpers lagern sich die in dem Luftstrom 112 noch enthaltenen Overspray-Partikel 114 ab. In bestimmten Zeitabständen oder bei Erreichen eines vorgegebenen Druckverlusts in den Sinterlamellenfiltern 242 werden die Sinterlamellenfilter 242 mittels eines Druckluft-Impulses abgereinigt. Die durch den Druckluft-Impuls von der Filterfläche der Sinterlamellenfilter 242 abgelösten Overspray-Partikel 114 gelangen aufgrund der Schwerkraft in unterhalb der Sinterlamellenfilter 242 angeordnete Sammeltrichter 244, aus denen der angesammelte Lack-Overspray durch Entnahmeöffnungen entnommen und einer Entsorgung oder Wiederverwertung zugeführt werden kann.

Sinterlamellenfilter der vorstehend genannten Art werden unter der Bezeichnung HERDING-DELTA von der Firma Herding GmbH, Filtertechnik in der August-Borsig-Straße 3, 92224 Amberg, Deutschland, vertrieben.

Der von dem Lack-Overspray befreite Luftstrom 112 gelangt durch die zweite Abtrennstufe 124 aus der Vorrichtung 120 hinaus und kann in die Umgebung abgegeben, oder, bei Umluftbetrieb, ganz oder teilweise wieder dem Lackierbereich 108 zugeführt werden.

Im übrigen stimmt die dritte Ausführungsform einer Anlage 100 zum Spritzlackieren von Fahrzeugkarosserien 102 hinsichtlich Aufbau und Funktion mit der ersten und der zweiten Ausführungsform überein, auf deren vorstehende Beschreibung insoweit Bezug genommen wird.

Insbesondere können alle im Zusammenhang mit den ersten beiden Ausführungsformen beschriebenen Merkmale, beispielsweise hinsichtlich der Orientierung, Bewegung, Führung und Erdung der Siebe 128 und bezüglich des Aufbaus und der geometrischen Eigenschaften der Siebe 128 auch bei der dritten Ausführungsform vorhanden sein.

## Patentansprüche

1. Vorrichtung zum Abtrennen von Lack-Overspray aus einem Overspray-Partikel (114) enthaltenden Luftstrom (112) mittels mindestens einer Abtrennstufe (122, 124),
**dadurch gekennzeichnet, daß**
mindestens eine Abtrennstufe (122) mindestens zwei Partikelsammelbereiche (164) aufweist, die abwechselnd in dem Strömungsweg desselben Teilbereichs des die Overspray-Partikel (114) enthaltenden Luftstroms (112) angeordnet werden können.

2. Vorrichtung nach Anspruch 1, **dadurch gekennzeichnet, daß** die mindestens zwei Partikelsammelbereiche (164) an mindestens zwei verschiedenen Abtrennelementen (128) angeordnet sind.

3. Vorrichtung nach Anspruch 2, **dadurch gekennzeichnet, daß** die Partikelsammelbereiche (164) der mindestens zwei Abtrennelemente (128) unabhängig voneinander in den Luftstrom (112) hinein und/oder aus dem Luftstrom (112) heraus bewegbar sind.

4. Vorrichtung nach einem der Ansprüche 1 bis 3, **dadurch gekennzeichnet, daß** mindestens einer der Partikelsammelbereiche (164) an einem Sieb (128) angeordnet ist, das Durchtrittsöffnungen (140) für den Luftstrom (112) und eine elektrisch leitfähige Oberfläche aufweist.

5. Vorrichtung nach Anspruch 4, **dadurch gekennzeichnet, daß** das Sieb (128) im wesentlichen aus einem elektrisch leitfähigen Material besteht.

6. Vorrichtung nach einem der Ansprüche 4 oder 5, **dadurch gekennzeichnet, daß** das Sieb (128) eine metallische Oberfläche aufweist.

7. Vorrichtung nach einem der Ansprüche 4 bis 6, **dadurch gekennzeichnet, daß** das Sieb (128) im wesentlichen aus einem metallischen Material besteht.

8. Vorrichtung nach einem der Ansprüche 4 bis 7, **dadurch gekennzeichnet, daß** das Sieb (128) ein Edelstahl-Material umfaßt.

9. Vorrichtung nach einem der Ansprüche 4 bis 8, **dadurch gekennzeichnet, daß** die Vorrichtung (120) eine Einrichtung (144; 146; 216) zum Erden des Siebes (128) umfaßt.

10. Vorrichtung nach einem der Ansprüche 4 bis 9, **dadurch gekennzeichnet, daß** die Vorrichtung (120) eine Einrichtung umfaßt, mittels welcher das Sieb (128) auf ein elektrisches Potential legbar ist, das eine der elektrischen Ladung der Overspray-Partikel (114) entgegengesetzte Polarität aufweist.

11. Vorrichtung nach einem der Ansprüche 4 bis 10, **dadurch gekennzeichnet, daß** das Sieb (128) ein Drahtgitter und/oder ein Drahtgewebe umfaßt.

12. Vorrichtung nach Anspruch 11, **dadurch gekennzeichnet, daß** das Drahtgitter bzw. das Drahtgewebe aus Draht mit einem Durchmesser im Bereich von ungefähr 1 µm bis ungefähr 500 µm, vorzugsweise im Bereich von ungefähr 4 µm bis ungefähr 40 µm, gebildet ist.

13. Vorrichtung nach einem der Ansprüche 11 oder 12, **dadurch gekennzeichnet, daß** das Drahtgitter bzw. das Drahtgewebe eine Maschenweite (W) im Bereich von ungefähr 1 µm bis ungefähr 1.000 µm, vorzugsweise im Bereich von ungefähr 4 µm bis ungefähr 40 µm, aufweist.

14. Vorrichtung nach einem der Ansprüche 4 bis 13, **dadurch gekennzeichnet, daß** die offene Siebfläche mindestens ungefähr 20 %, vorzugsweise mindestens ungefähr 25 %, insbesondere mindestens ungefähr 30 %, der gesamten Siebfläche beträgt.

15. Vorrichtung nach einem der Ansprüche 4 bis 14, **dadurch gekennzeichnet, daß** das Sieb (128) als ein Flächengebilde ausgebildet ist.

16. Vorrichtung nach einem der Ansprüche 4 bis 15, **dadurch gekennzeichnet, daß** die Dicke (D) des Siebes (128) kleiner ist als ungefähr das 5000fache, vorzugsweise kleiner als ungefähr das 100fache, insbesondere kleiner als ungefähr das Zehnfache, des mittleren hydraulischen Durchmessers der Durchtrittsöffnungen (140) des Siebes (128).

17. Vorrichtung nach einem der Ansprüche 4 bis 16, **dadurch gekennzeichnet, daß** der mittlere hydraulische Durchmesser der Durchtrittsöffnungen (140) des Siebes (128) im Bereich von ungefähr 1 µm bis ungefähr 1.000 µm, vorzugsweise im Bereich von ungefähr 4 µm bis ungefähr 40 µm, liegt.

18. Vorrichtung nach einem der Ansprüche 4 bis 17, **dadurch gekennzeichnet, daß** das Sieb (128) flexibel ausgebildet ist.

19. Vorrichtung nach einem der Ansprüche 4 bis 18, **dadurch gekennzeichnet, daß** das Sieb (128) aufrollbar ist.

20. Vorrichtung nach einem der Ansprüche 1 bis 19, **dadurch gekennzeichnet, daß** die Vorrichtung (120) mindestens einen Partikelsammelbereich (164) aufweist, der im wesentlichen kontinuierlich durch den Strömungsweg des die Overspray-Partikel (114) enthaltenden Luftstroms (112) hindurch bewegbar ist.

21. Vorrichtung nach einem der Ansprüche 1 bis 20, **dadurch gekennzeichnet, daß** die Vorrichtung (120) mindestens einen Partikelsammelbereich (164) aufweist, der in den Strömungsweg des die Overspray-Partikel (114) enthaltenden Luftstroms (112) hinein bewegbar und nach einer Sammelphase aus dem Strömungsweg des Luftstroms heraus bewegbar ist.

22. Vorrichtung nach einem der Ansprüche 1 bis 21, **dadurch gekennzeichnet, daß** die Vorrichtung (120) mindestens ein Abtrennelement (128) mit mindestens einem Partikelsammelbereich und mindestens eine Abreinigungsvorrichtung (154; 192) zum Abreinigen von Partikeln (114) von dem mindestens einen Abtrennelement (128) umfaßt.

23. Vorrichtung nach Anspruch 22, **dadurch gekennzeichnet, daß** die Abreinigungsvorrichtung (192) eine Absaugeinrichtung (198; 210) zum Absaugen von Partikeln von dem Abtrennelement (128) umfaßt.

24. Vorrichtung nach Anspruch 23, **dadurch gekennzeichnet, daß** die Partikel quer, vorzugsweise im wesentlichen senkrecht, zur Abscheideoberfläche des Abtrennelements (128) abgesaugt werden.

25. Vorrichtung nach einem der Ansprüche 23 oder 24, **dadurch gekennzeichnet, daß** die Partikel im wesentlichen parallel zur Abscheideoberfläche des Abtrennelements (128) abgesaugt werden.

26. Vorrichtung nach einem der Ansprüche 22 bis 25, **dadurch gekennzeichnet, daß** die Abreinigungsvorrichtung (192) eine Druckluftdüse (194) zum Abblasen von Partikeln von dem Abtrennelement (128) umfaßt.

27. Vorrichtung nach einem der Ansprüche 22 bis 26, **dadurch gekennzeichnet, daß** die Abreinigungsvorrichtung (192) eine Bürste (200) zum Abbürsten von Partikeln von dem Abtrennelement (128) umfaßt.

28. Vorrichtung nach einem der Ansprüche 22 bis 27, **dadurch gekennzeichnet, daß** die Abreinigungsvorrichtung (154) eine Einrichtung zum Abreinigen des Abtrennelements (128) mittels einer Flüssigkeit umfaßt.

29. Vorrichtung nach einem der Ansprüche 22 bis 28, **dadurch gekennzeichnet, daß** die Abreinigungsvorrichtung (154) ein Reinigungsbad (156) für das Abtrennelement (128) umfaßt.

30. Vorrichtung nach einem der Ansprüche 22 bis 29, **dadurch gekennzeichnet, daß** ein Partikelsammelbereich (164) des Abtrennelements (128) durch die Abreinigungsvorrichtung (154; 192) hindurch bewegbar ist.

31. Vorrichtung nach einem der Ansprüche 22 bis 30, **dadurch gekennzeichnet, daß** die Vorrichtung (120) Sammelbehälter für mindestens zwei verschiedene Sorten von Overspray umfaßt, denen von der Abreinigungsvorrichtung (192) abwechselnd Overspray-Partikel zugeführt werden.

32. Vorrichtung nach einem der Ansprüche 22 bis 31, **dadurch gekennzeichnet, daß** die Vorrichtung (120) mindestens zwei Abreinigungsvorrichtungen (192) für mindestens zwei verschiedene Sorten von Overspray umfaßt.

33. Vorrichtung nach einem der Ansprüche 1 bis 32, **dadurch gekennzeichnet, daß** das Abtrennelement (128) längs einer Bewegungsrichtung (132) beweglich ist und die Vorrichtung (120) mindestens eine Führung (168) zum seitlichen Führen des Abtrennelements (128) umfaßt.

34. Vorrichtung nach Anspruch 33, **dadurch gekennzeichnet, daß** das Abtrennelement (128) mit einer Verstärkung (166) versehen ist, die an der Führung (168) geführt ist.

35. Vorrichtung nach einem der Ansprüche 33 oder 34, **dadurch gekennzeichnet, daß** die Führung (168) ein Magnetelement (174) umfaßt und/oder das Abtrennelement (128) mit einer Einfassung (172) versehen ist, welche ein Magnetelement umfaßt.

36. Vorrichtung nach einem der Ansprüche 1 bis 35, **dadurch gekennzeichnet, daß** das Abtrennelement (128) mittels eines Zugmittels (186) bewegbar ist.

37. Vorrichtung nach Anspruch 36, **dadurch gekennzeichnet, daß** das Abtrennelement (128) eine Halterung (184) zum Verbinden des Zugmittels (186) mit dem Abtrennelement (128) aufweist.

38. Vorrichtung nach einem der Ansprüche 1 bis 37, **dadurch gekennzeichnet, daß** das Abtrennelement (128) mittels einer Schubkette (220) bewegbar ist.

39. Vorrichtung nach Anspruch 38, **dadurch gekennzeichnet, daß** das Abtrennelement (128) Haltelaschen (226) zum Verbinden des Abtrennelements (128) mit der Schubkette (220) aufweist.

40. Vorrichtung nach einem der Ansprüche 1 bis 39, **dadurch gekennzeichnet, daß** das Abtrennelement (128) Sicken (177) aufweist.

41. Vorrichtung nach Anspruch 40, **dadurch gekennzeichnet, daß** das Abtrennelement (128) längs einer Bewegungsrichtung (132) bewegbar ist und die Sicken (177) sich quer, vorzugsweise im wesentlichen senkrecht, zu der Bewegungsrichtung (132) erstrecken.

42. Vorrichtung nach einem der Ansprüche 1 bis 41, **dadurch gekennzeichnet, daß** die Vorrichtung (120) mindestens zwei hintereinander geschaltete Abtrennstufen (122, 124) zum Abtrennen des Oversprays aus dem Luftstrom (112) umfaßt.

43. Vorrichtung nach Anspruch 42, **dadurch gekennzeichnet, daß** die Abtrennstufe (122), welche zuerst von dem Luftstrom (112) passiert wird, mindestens ein Sieb (128) umfaßt.

44. Vorrichtung nach einem der Ansprüche 42 oder 43, **dadurch gekennzeichnet, daß** mindestens eine der Abtrennstufen (124) ein Absorptionsfilter, insbesondere ein Beutelfilter und/oder ein Taschenfilter (148), umfaßt.

45. Vorrichtung nach einem der Ansprüche 42 bis 44, **dadurch gekennzeichnet, daß** alle Abtrennstufen (122, 124) der Vorrichtung (120) als trockene Abtrennstufen ausgebildet sind.

46. Vorrichtung nach einem der Ansprüche 42 bis 45, **dadurch gekennzeichnet, daß** die Vorrichtung (120) zum Abtrennen von Naßlack-Overspray aus einem Luftstrom (112) ausgebildet ist.

47. Anlage zum Lackieren von Werkstücken, insbesondere Fahrzeugkarosserien (102), umfassend eine Einrichtung zur Erzeugung eines Luftstroms (112) durch einen Lackierbereich (108) der Anlage (100) und eine Vorrichtung (120) zum Abtrennen von Lack-Overspray aus dem Luftstrom (112) nach einem der Ansprüche 1 bis 46.

48. Anlage nach Anspruch 47, **dadurch gekennzeichnet, daß** die Anlage (100) zum Lackieren der Werkstücke mit einem Naßlack ausgebildet ist und die Vorrichtung (120) zum Abtrennen des Naßlack-Oversprays aus dem Luftstrom (112) mindestens zwei Abtrennstufen (122, 124) umfaßt, wobei die zuerst von dem Luftstrom (112) passierte Abtrennstufe (122) als eine trockene Abtrennstufe mit einem Abtrennelement, insbesondere einem Sieb (128), und einer Abreinigungsvorrichtung (154; 192) zum Abreinigen von Overspray von dem Abtrennelement ausgebildet ist.

49. Anlage nach Anspruch 48, **dadurch gekennzeichnet, daß** alle Abtrennstufen (122, 124) der Vorrichtung (120) zum Abtrennen des Naßlack-Oversprays aus dem Luftstrom (112) als trockene Abtrennstufen ausgebildet sind.

50. Anlage nach einem der Ansprüche 48 oder 49, **dadurch gekennzeichnet, daß** die Anlage (100) eine Umlufteinrichtung umfaßt, durch welche zumindest ein Teil des durch die Vorrichtung (120) zum Abtrennen von Naßlack-Overspray geleiteten Luftstroms (112) zu dem Lackierbereich (108) der Anlage (100) zurückgeleitet wird.

51. Verfahren zum Abtrennen von Lack-Overspray aus einem Overspray-Partikel (114) enthaltenden Luftstrom (112), **dadurch gekennzeichnet, daß** mindestens zwei Partikelsammelbereiche (164) abwechselnd in dem Strömungsweg desselben Teilbereichs des Luftstroms (112) angeordnet werden, so daß Overspray-Partikel aus dem betreffenden Teilbereich des Luftstroms (112) in einer ersten Sammelphase an dem einen Partikelsammelbereich und in einer späteren zweiten Sammelphase an dem anderen Partikelsammelbereich (164) abgeschieden werden.
